# EUROPEAN PATENT APPLICATION

(11) **EP 4 692 898 A1**
(43) Date of publication of application: **11.02.2026**
(21) Application number: 24853368.9
(22) Date of filing: 19.06.2024
(51) Int. Cl.: G02B 27/01

(54) **ADJUSTMENT MECHANISM FOR HEAD-MOUNTED DISPLAY DEVICE, HEAD-MOUNTED DISPLAY DEVICE, AND DISPLAY METHOD THEREOF**

(30) Priority: 11.08.2023 CN 202311016248
(71) Applicant: Huawei Technologies Co., Ltd., Shenzhen, Guangdong 518129 (CN)
(72) Inventor: HAO, Yongzhi, Shenzhen, Guangdong 518129 (CN); LIN, Guoliang, Shenzhen, Guangdong 518129 (CN); LI, Kuokuo, Shenzhen, Guangdong 518129 (CN); YANG, Linlin, Shenzhen, Guangdong 518129 (CN); PENG, Cheng, Shenzhen, Guangdong 518129 (CN); HUANG, Chao, Shenzhen, Guangdong 518129 (CN)
(74) Representative: Gill Jennings & Every LLP
(86) International application number: PCT/CN2024/100155
(87) International publication number: WO 2025/035953

(57) **Abstract**

This application discloses an adjustment mechanism of a head-mounted display device, the head-mounted display device, and a display method thereof, to improve interactivity of the head-mounted display device in different scenarios, and improve operation convenience of a user. The adjustment mechanism is mounted on a housing of the head-mounted display device, the adjustment mechanism includes an adjustment rod and a transmission assembly, and the adjustment rod has a first state and a second state. The adjustment rod is configured to: in the first state, be disconnected from the transmission assembly, and trigger, when a pressing operation or a rotation operation is received, an electrical component in the head-mounted display device to send a signal; and the adjustment rod is configured to: in the second state, be in transmission connection to the transmission assembly, and transmit power to the transmission assembly when a rotation operation is received. The transmission assembly is configured to receive the power transmitted by the adjustment rod, and drive a display assembly of the head-mounted display device to perform nearsightedness or farsightedness adjustment.

## Description

### CROSS-REFERENCE TO RELATED APPLICATIONS

This application claims priority to Chinese Patent Application No. 202311016248.2, filed with the China National Intellectual Property Administration on August 11, 2023 and entitled "ADJUSTMENT MECHANISM OF HEAD-MOUNTED DISPLAY DEVICE, HEAD-MOUNTED DISPLAY DEVICE, AND DISPLAY METHOD THEREOF", which is incorporated herein by reference in its entirety.

### TECHNICAL FIELD

This application relates to the field of electronic device technologies, and in particular, to an adjustment mechanism of a head-mounted display device, the head-mounted display device, and a display method thereof.

### BACKGROUND

A metaverse is a virtual world that is constructed by using digital technologies, mapped from or transcending a real world, and can interact with the real world. A head-mounted display device is an entrance of the metaverse. A user can use the head-mounted display device to interact with the virtual world, to meet entertainment and work requirements. A common head-mounted display device is, for example, an augmented reality (augmented reality, AR) device or a virtual reality (virtual reality, VR) device.

Currently, the head-mounted display device has a problem that gesture interaction fails in some scenarios. As a result, the user needs to use a peripheral to interact with the device, and interaction is poor. In addition, for a nearsighted or farsighted user, although some head-mounted display devices are configured with a vision correction function, the user usually needs to take off the device for adjustment. However, in this state, the user cannot determine whether adjusted effect adapts to a nearsightedness degree or a farsightedness degree of the user. Consequently, operation duration is excessively long and an operation is complex.

### SUMMARY

This application provides an adjustment mechanism of a head-mounted display device, the head-mounted display device, and a display method thereof, to improve interactivity of the head-mounted display device in different scenarios, and improve operation convenience of a user.

According to a first aspect, this application provides an adjustment mechanism of a head-mounted display device. The adjustment mechanism may be mounted on a housing of the head-mounted display device, and is configured to adjust the head-mounted display device when a user operation is received. The adjustment mechanism includes an adjustable rod and a transmission assembly. The adjustment rod has a first state and a second state. The adjustment rod may be configured to: in the first state, be disconnected from the transmission assembly, and trigger, when a pressing operation or a rotation operation is received, an electrical component in the head-mounted display device to send a signal; and the adjustment rod may be configured to: in the second state, be in transmission connection to the transmission assembly, and transmit power to the transmission assembly when a rotation operation is received. The transmission assembly may be configured to: receive the power transmitted by the adjustment rod in the second state, and drive, through the power, a display assembly of the head-mounted display device to perform nearsightedness or farsightedness adjustment. The adjustment mechanism is used. In a process of wearing the head-mounted display device, a user may not interact with the head-mounted display device by using a handle or a gesture, but directly control the head-mounted display device via the adjustment mechanism. In this way, even in a scenario in which there is no handle or there is low light, the user can still use the head-mounted display device. Therefore, interactivity of the head-mounted display device in different scenarios is effectively improved, and operation convenience of the user is improved.

In some implementation solutions, an adjustment button may be disposed at an end of the adjustment rod, to facilitate a user operation. Parameters such as a diameter and a thickness of the adjustment button may be designed based on human factors, to reduce operation difficulty of the user.

In some implementation solutions, the adjustment rod may include a first rod body and a second rod body, a diameter of the first rod body is greater than a diameter of the second rod body, one end of the first rod body may be configured to dispose the adjustment button, and an end face of the other end of the first rod body may be provided with a groove; and an end of the second rod body may be assembled in the groove of the first rod body, so that the first rod body is fastened to the second rod body. This split-body structure design can reduce difficulty in assembling the adjustment rod and the transmission assembly. In addition, because a radial size of the second rod body is small, the transmission assembly may also cooperate with the second rod body in a small size. This helps reduce an overall size of the adjustment mechanism.

In some implementation solutions, the adjustment mechanism may further include a limiting assembly. The limiting assembly is provided with an elastic arm, and an end portion of the elastic arm is provided with a protrusion disposed toward a peripheral side of the adjustment rod. A first limiting groove and a second limiting groove may be disposed on the peripheral side of the adjustment rod, the first limiting groove and the second limiting groove are spaced from each other in an axial direction of the adjustment rod, the adjustment rod is capable of sliding relative to the limiting assembly, the adjustment rod may be in the first state when the protrusion of the elastic arm is limited in the first limiting groove, and the adjustment rod may be in the second state when the limiting protrusion of the elastic arm is limited in the second limiting groove, so that the adjustment rod reliably remains in the first state or the second state via the limiting assembly.

In addition, the limiting assembly may further include a fastening bracket and a limiting cover. The fastening bracket and the limiting cover may be fastened to form a limiting hole, and the adjustment rod is slidably disposed in the limiting hole. The elastic arm may be fastened to the fastening bracket or the limiting cover, and a side that is of the elastic member and that is provided with the protrusion may face the limiting hole, so that, when the adjustment rod slides in the limiting hole, the protrusion can be switched between the first limiting groove and the second limiting groove of the adjustment rod.

In some implementation solutions, the first limiting groove and the second limiting groove may be spaced from each other via a limiting step, and end faces on two sides of the limiting step in the axial direction of the adjustment rod each may have a chamfer structure, to reduce a risk that the protrusion of the elastic arm is stuck in the first limiting groove or the second limiting groove, so that the adjustment rod can smoothly switch between the first state and the second state.

In some implementation solutions, a length of the first limiting groove in the axial direction of the adjustment rod may be greater than a length of the protrusion of the elastic arm in the axial direction of the adjustment rod. In this way, when the adjustment rod is in the first state, the adjustment rod may generate slight displacement under a pressing action, to easily trigger the electrical component in the head-mounted display device.

In some implementation solutions, the adjustment mechanism may include a limiting assembly in another form. The limiting assembly may include a spring plate and a rotating member, the spring plate may be fastened to a mechanical part in the housing, and the spring plate has a first accommodating groove and a second accommodating groove that are spaced from each other, the rotating member may include a rotating portion and a first rotating arm and a second rotating arm that are connected to the rotating portion, the rotating portion may be rotatably disposed on the mechanical part in the housing of the head-mounted display device, the first rotating arm is provided with a first limiting pole, the first limiting pole may be switched between the first accommodating groove and the second accommodating groove as the rotating portion rotates, and the second rotating arm is provided with the second limiting pole. A peripheral side of the adjustment rod is provided with a clamping groove, the clamping groove may be configured to clamp the second limiting pole, the adjustment rod drives, via the second limiting pole, the rotating member to rotate when the adjustment rod may slide, the adjustment rod is in the first state when the first limiting pole is limited in the first accommodating groove, and the adjustment rod is in the second state when the second limiting pole is limited in the second accommodating groove. In this way, the adjustment rod can be reliably limited to the first state or the second state via the limiting assembly.

For example, the rotating member may be located between the spring plate and the adjustment rod. In this case, the first limiting pole and the second limiting pole may be respectively located on two opposite sides of the rotating portion, to implement cooperation of corresponding structures of the spring plate and the adjustment rod.

In some implementation solutions, the first accommodating groove and the second accommodating groove are spaced from each other via a limiting protrusion, and the limiting protrusion may have an arc-shaped surface, to reduce a risk of sticking when the first limiting pole moves from the first accommodating groove to the second accommodating groove or moves from the second accommodating groove to the second accommodating groove.

In some implementation solutions, a width of the first accommodating groove may be greater than a diameter of the first limiting pole. In this way, when the adjustment rod is in the first state, the adjustment rod may generate slight displacement under a pressing action, to facilitate triggering of the electrical component in the head-mounted display device.

In some implementation solutions, the transmission assembly may include a plurality of stages of gear pairs sequentially in transmission connection and a box, and at least one stage of gear pair is mounted in the box; and in a transmission direction of the power, a first stage of gear pair in the plurality of stages of gear pairs may be configured to: be in transmission connection to the adjustment rod in a meshed state, and be disconnected from the adjustment rod in a non-meshed state; and a last stage of gear pair in the plurality of stages of gear pairs may be configured to be in transmission connection to the display assembly of the head-mounted display device, to drive the display assembly to perform nearsightedness or farsightedness adjustment.

In some implementation solutions, the first stage of gear pair may include a first gear and a second gear, the first gear and the second gear may be separately sleeved on the adjustment rod, the first gear may be fastened to the adjustment rod, the second gear is in clearance fit with the adjustment rod, the second gear is rotatably assembled in the box, and the first gear and the second gear are end-surface gears. When the adjustment rod is in the first state, the first gear and the second gear are spaced from each other, to disconnect the transmission chain of the transmission assembly, and when the adjustment rod is in the second state, the first gear is meshed with the second gear, so that the power is transmitted from the first gear to the second gear.

In addition, to ensure that the first gear is smoothly connected to the second gear, an addendum of a gear tooth of the first gear may use an arc surface for transition. Similarly, an addendum of a gear tooth of the second gear may also use an arc surface for transition.

In some implementation solutions, the last stage of gear pair is located outside the box, the last stage of gear pair may include a first bevel gear and a second bevel gear, the first bevel gear may be in transmission connection to a previous stage of gear pair of the last stage of gear pair, and the second bevel gear may be fastened to the display assembly, to sequentially transmit the power from the adjustment rod to the display assembly.

In some implementation solutions, in addition to the first stage of gear pair and the last stage of gear pair, the gear assembly may further include a second stage of gear pair and a third stage of gear pair. The second stage of gear pair is a cylindrical gear pair, the second stage of gear pair includes a third gear and a fourth gear, the third gear and the fourth gear may be separately rotatably assembled in the box, and the third gear is fastened to the second gear. The third stage of gear pair is a cylindrical gear pair, the third stage of gear pair includes a fifth gear and a sixth gear, the fifth gear and the sixth gear may be separately rotatably assembled in the box, the fifth gear is in transmission connection to the fourth gear via a universal joint, and the sixth gear is in transmission connection to a driving gear of the last stage of gear pair. The fourth gear and the fifth gear are connected via the universal joint, so that variable-angle power transmission can be implemented between the fourth gear and the fifth gear, thereby reducing a requirement on disposing positions of a start end and a tail end of the power transmission.

In some implementation solutions, the transmission assembly may further include a gear rod, the gear rod may extend from the inside of the box to the outside of the box, the gear rod is slidably connected to the box, the gear rod is capable of rotating relative to the box, and a portion that is of the gear rod and that is located in the box has a special-shaped cross section. The sixth gear may be slidably assembled on the portion that is of the gear rod and that is located in the box, and a cross-sectional shape of a gear hole of the sixth gear is the same as a cross-sectional shape of the special-shaped cross section of the gear rod, so that the sixth gear can drive the gear rod to rotate, a degree of freedom of the gear rod in the axial direction is also released, and the gear rod can move in the axial direction of the gear rod. The driving gear of the last stage of gear pair is fastened to a portion that is of the gear rod and that is located outside the box, so that the driving gear can rotate or slide synchronously with the gear rod.

In some implementation solutions, the box may include a body, a first gear cover, a second gear cover, and a third gear cover, the first gear cover and the second gear cover are respectively disposed on two opposite sides of the body, the third gear cover is disposed adjacent to the first gear cover and the second gear cover, and the third gear cover is fastened to each of the body, the first gear cover, and the second gear cover.

In some other implementation solutions, in addition to the first stage of gear pair and the last stage of gear pair, the gear assembly may further include a second stage of gear pair, the second stage of gear pair may be a cylindrical gear pair, the second stage of gear pair includes a third gear and a fourth gear, the third gear and the fourth gear may be separately rotatably assembled in the box, the third gear is fastened to the second gear, and the fourth gear is in transmission connection to a driving gear of the last stage of gear pair via a universal joint, so that variable-angle power transmission is implemented between the fourth gear and the last stage of gear pair, thereby reducing a requirement on disposing positions of a start end and a tail end of the power transmission.

In the foregoing solution, the universal joint may include a first universal joint fork, a second universal joint fork, and a cross shaft, the cross shaft is separately assembled on the first universal joint fork and the second universal joint fork, the first universal joint fork is fastened to the fourth gear, an end that is of the second universal joint fork and that is away from the cross shaft is provided with a sleeve, and an inner hole of the sleeve may be a special-shaped hole. One end of the gear rod may be slidably assembled on the sleeve, and a cross-sectional shape of the gear rod is the same as a cross-sectional shape of the special-shaped hole. In this way, the universal joint can drive the gear rod to rotate, a degree of freedom of the gear rod in the axial direction is also released, and the gear rod can move in the axial direction of the gear rod. The other end of the gear rod is fastened to the driving gear of the last stage of gear pair, so that the driving gear of the last stage of gear pair can rotate or slide synchronously with the gear rod.

According to a second aspect, this application further provides a head-mounted display device. The head-mounted display device includes a housing, a display assembly, and the adjustment mechanism in any implementation solution of the first aspect. The display assembly and the adjustment mechanism are mounted in the housing. There are two display assemblies and two adjustment mechanisms, the two display assemblies are disposed in a one-to-one correspondence with the two adjustment mechanisms. The two display assemblies are arranged in a first direction. Each adjustment mechanism may be disposed on a side that is of one corresponding display assembly and that faces away from the other display assembly, an adjustment rod of the adjustment mechanism is slidably assembled in the housing, the adjustment rod has a first end exposed outside the housing, the adjustment rod is in a first state when the first end of the adjustment rod moves close to the housing, and the adjustment rod is in a second state when the first end of the adjustment rod moves away from the housing. In this application, when the adjustment rod is in the first state, the adjustment rod may be switched from the first state to the second state by applying a pulling force to the adjustment rod. On the contrary, when the adjustment rod is in the second state, the adjustment rod may be switched from the second state to the first state by applying a push force to the adjustment button.

In some implementation solutions, the display assembly may include a lens barrel, a display, a first lens, and a lens support. The display may be fastened in the lens barrel, the first lens is carried on the lens support, the lens support may be slidably disposed in the lens barrel in an axial direction of the lens barrel, the lens support is in transmission connection to the transmission assembly, and the lens support may be configured to slide in a direction close to or away from the display under driving of the transmission assembly, to drive the first lens to slide synchronously. Based on this design, when the user wears the head-mounted display device, a focal length of the eye of the user may be adjusted by adjusting a distance between the first lens and the eyes of the user, and focal lengths of eyes of users with different nearsightedness or farsightedness degrees are adjusted to the retina, that is, the display assembly implements a nearsightedness or farsightedness adjustment function.

In an implementation, the first lens is a concave lens. In this case, the first lens may be used as a nearsighted lens, so that the display assembly implements a function of correcting vision of a nearsighted user. In another implementation, the first lens is a convex lens. In this case, the first lens may be used as a farsighted lens, so that the display assembly has a function of correcting vision of a farsighted user.

In some implementation solutions, the lens barrel may include a first barrel body and a second barrel body, the first barrel body may be configured to accommodate the display, the first lens, and the lens support, a sliding rail extending in an axial direction is disposed on the first barrel body, a sliding pin may be disposed on a peripheral side of the lens support, and the sliding pin is slidably disposed on the sliding rail. The second barrel body is sleeved on an outside of the first barrel body, a spiral sliding slot may be disposed on an inner wall of the second barrel body, an end portion of the sliding pin may extend from the inside of the sliding rail and be assembled in the sliding slot, the second barrel body is in transmission connection to the transmission assembly, and the second barrel body can rotate under driving of the transmission assembly. When the second barrel body is rotated, the end portion of the sliding pin may slide in the sliding slot of the second barrel body, and there is a movement trend of spiral rising or spiral falling. However, due to a limitation of the sliding rail of the first barrel body, only displacement in the axial direction exists for the lens support under driving of the second barrel body. In this way, positions adjustment of the lens support and the first lens carried on the lens support is implemented.

In some implementation solutions, the lens group may further include a second lens. The second lens may be fastened in the first barrel body, and the second lens is located on a side that is of the first lens and that faces away from the display. The second lens may be configured to correct an angle of the light source of the lens of the eye of the user, so that the user can clearly see a display picture of the display.

In some implementation solutions, the housing may include a frame and a cover plate that is fastened to the frame, a first guide rail and a second guide rail may be disposed on the cover plate, the first guide rail and the second guide rail may be arranged in a first direction, and the first guide rail and the second guide rail may separately extend in the first direction. One of the two display assemblies may be slidably assembled on the first guide rail, and the other display assembly may be slidably assembled on the second guide rail. In this design, a distance between the two display assemblies can be adjusted, so that the head-mounted display device can implement a pupillary distance adjustment function, thereby meeting use requirements of user groups with different pupillary distances, and improving user experience.

In some implementation solutions, an electrical component in the head-mounted display device may include a button, a first support arm may be disposed in the housing, an end portion of the first support arm is disposed close to a second end that is of the adjustment rod and that is located in the housing, and the button may be fastened to a side that is of the first support arm and that faces the second end of the adjustment rod. The adjustment rod may be configured to trigger the button when a pressing operation is received by the adjustment rod in the first state, so that the button sends a pressing signal when the button is triggered.

In some implementation solutions, the electrical component in the head-mounted display device may further include a sensor, a second support arm may be disposed in the housing, an end portion of the second support arm is disposed close to a peripheral side of the adjustment rod, and the sensor may be disposed at the end portion of the second support arm, to detect a rotation signal of the adjustment rod. Alternatively, it may be understood that when the adjustment rod rotates, the adjustment rod may trigger the sensor to send a rotation signal.

For example, an outer wall of the adjustment rod may include a plurality of areas distributed in a circumferential direction, and surface roughness of the plurality of areas is different from each other. A surface that is of the sensor and that faces the adjustment rod includes a light source and a photosensitive area. The light source may be configured to emit light to the adjustment rod, so that the light is reflected on an outer wall of the adjustment rod. The photosensitive area may be used to receive the reflected light. Because roughness of each area on the outer wall of the adjustment rod is different, reflection degrees for the roughness are also different from each other. When the light is reflected by different areas of the adjustment rod, reflected light received by the photosensitive area is also different. In this way, an area in which the light is reflected on the adjustment rod may be determined based on the reflected light received by the photosensitive area, and then a rotation angle of the adjustment rod may be calculated.

In some implementation solutions, the head-mounted display device may further include a processor, and the processor may be configured to:
when it is determined that the head-mounted display device is in a state in which a handle is not connected, receive a signal sent by the electrical component when the electrical component is triggered by the adjustment mechanism; and
generate a corresponding control instruction based on a type of the signal, where the control instruction is used to control display content of a display interface of the head-mounted display device.

In this application, a user may not interact with the head-mounted display device by using a handle or a gesture, but directly control the head-mounted display device via the adjustment mechanism. In this way, even in a scenario in which there is no handle or there is low light, the head-mounted display device can still be used. Therefore, interactivity of the head-mounted display device in different scenarios is effectively improved, and operation convenience of the user is improved.

In some implementation solutions, the processor may be further configured to:
before receiving the signal sent by the electrical component when the electrical component is triggered by the adjustment rod, control, based on a head action or an eye action of a user, a cursor in the display interface to point to an interactive control in the display interface, thereby improving effectiveness of the control instruction.

In some implementation solutions, the type of the signal may include a pressing signal, and the processor may be configured to:
generate a first control instruction based on the pressing signal, where the first control instruction may be used to control the cursor in the display interface to click the interactive control in the display interface.

In some implementations, the type of signal may include a rotation signal, and the processor may be configured to:
generate a second control instruction based on the rotation signal, where the second control instruction may be used to control sliding of the display interface.

In some implementation solutions, the processor may be further configured to:
determine a state of the adjustment rod when the rotation signal is received, and generate a second control instruction based on the rotation signal when the adjustment rod is in a first state. In other words, after the adjustment rod receives the rotation operation in the first state, the adjustment rod may trigger the electrical component and enable the electrical component to send an effective rotation signal. After the adjustment rod receives a rotation operation in the second state, the adjustment rod may also trigger the electrical component and enable the electrical component to send a rotation signal, but the rotation signal in this state is invalid, and the processor may not process the signal, to avoid a misoperation.

According to a third aspect, this application further provides a display method of a head-mounted display device. The display method includes:
when it is determined that the head-mounted display device is in a state in which a handle is not connected, receiving a signal sent by an electrical component in the head-mounted display device when the electrical component is triggered by an adjustment mechanism of the head-mounted display device; and
generating a corresponding control instruction based on a type of the signal, where the control instruction is used to control display content of a display interface of the head-mounted display device.

According to the display method provided in this application, a user may not interact with the head-mounted display device by using a handle or a gesture, but directly control the head-mounted display device via the adjustment mechanism. In this way, even in a scenario in which there is no handle or there is low light, the head-mounted display device can still be used. Therefore, interactivity of the head-mounted display device in different scenarios is effectively improved, and operation convenience of the user is improved.

In some embodiments, the display method may further include:
before receiving the signal sent by the electrical component when the electrical component is triggered by the adjustment rod, controlling, based on a head action or an eye action of a user, a cursor in the display interface to point to an interactive control in the display interface, thereby improving effectiveness of the control instruction.

In some implementation solutions, the type of the signal may include a pressing signal, and the display method may specifically include:
generating a first control instruction based on the pressing signal, where the first control instruction may be used to control the cursor in the display interface to click the interactive control in the display interface.

In some implementation solutions, the type of the signal may include a rotation signal, and the display method may specifically include:
generating a second control instruction based on the rotation signal, where the second control instruction may be used to control sliding of the display interface.

### BRIEF DESCRIPTION OF DRAWINGS

FIG. 1 is a diagram of a structure of a head-mounted display device according to an embodiment of this application;
FIG. 2 is a diagram of a structure of a display module according to an embodiment of this application;
FIG. 3 is a diagram of a structure of a first display assembly according to an embodiment of this application;
FIG. 4 is a partial exploded diagram of a first display assembly according to an embodiment of this application;
FIG. 5 is a diagram of a cross-sectional structure of a first display assembly according to an embodiment of this application;
FIG. 6 is a diagram of a partial structure of a display module according to an embodiment of this application;
FIG. 7 is a diagram of a partial cross-sectional structure of the display module shown in FIG. 6;
FIG. 8 is a diagram of a structure of a first adjustment mechanism in a state according to an embodiment of this application;
FIG. 9 is a diagram of a structure of a first adjustment mechanism in another state according to an embodiment of this application;
FIG. 10 is a diagram of a structure of a universal joint shown in FIG. 8;
FIG. 11 is an exploded diagram of a partial structure of a lens barrel and a transmission assembly according to an embodiment of this application;
FIG. 12 is a partial exploded diagram of a transmission assembly according to an embodiment of this application;
FIG. 13 is a diagram of a structure of another first adjustment mechanism according to an embodiment of this application;
FIG. 14 is an exploded diagram of a partial structure of the first adjustment mechanism shown in FIG. 13;
FIG. 15 is a diagram of a partial structure of the first adjustment mechanism shown in FIG. 13;
FIG. 16 is a diagram of a partial structure of a limiting assembly of the first adjustment mechanism shown in FIG. 13 in a state;
FIG. 17 is a diagram of a partial structure of a limiting assembly of the first adjustment mechanism shown in FIG. 13 in another state;
FIG. 18 is a diagram of a partial structure of a transmission assembly of the first adjustment mechanism shown in FIG. 13 in a state;
FIG. 19 is a diagram of a partial structure of a transmission assembly of the first adjustment mechanism shown in FIG. 13 in another state;
FIG. 20 is an exploded diagram of a partial structure of a lens barrel and a transmission assembly shown in FIG. 13;
FIG. 21 is a partial exploded diagram of a transmission assembly shown in FIG. 13;
FIG. 22a shows a display interface of a head-mounted display device according to an embodiment of this application;
FIG. 22b shows another display interface of a head-mounted display device according to an embodiment of this application; and
FIG. 23 is a flowchart of a display method of a head-mounted display device according to an embodiment of this application.

### BRIEF DESCRIPTION OF DRAWINGS

100: display module; 110: housing; 111: frame; 1111: first through hole; 112: cover plate; 1121: first guide rail; 113: accommodating space;
114: first support arm; 115: second support arm;
120: display assembly; 120a: first display assembly; 120b: second display assembly; 121: lens barrel; 1211: first barrel body; 12111: sliding rail;
12112: flange; 1212: second barrel body; 12121: sliding slot; 1213: convex lug; 1214: first limiting wall; 1215: second limiting wall;
122: lens group; 1221: first lens; 1222: second lens; 123: lens support; 1231: sliding pin;
130: adjustment mechanism; 130a: first adjustment mechanism; 130b: second adjustment mechanism; 131: adjustment rod; 1311: first rod body;
13111: groove; 1312: second rod body; 1313: first limiting groove; 1314: second limiting groove; 1315: limiting step;
1316: special-shaped plug; 1317: sealing ring; 1318: clamping groove; 132: transmission assembly; 1321: box; 132101: first hole;
132102: second hole; 132103: third hole; 13211: body; 132111: first accommodating cavity; 132112: second accommodating cavity;
132113: third accommodating cavity; 132114: fourth accommodating cavity; 13212: gear cover; 13212a: first gear cover; 13212b: second gear cover;
13212c: third gear cover; 13213: first portion; 13214: second portion; 132141: through groove; 1322: first stage of gear pair;
13221: first gear; 13222: second gear; 1323: second stage of gear pair; 13231: third gear; 13232: fourth gear;
1324: third stage of gear pair; 13241a: fifth gear; 13242a: sixth gear; 132421: guide protrusion; 1325: fourth stage of gear pair;
13251 and 13241b: first bevel gears; 13252 and 13242b: second bevel gears; 1326: universal joint; 13261: first universal joint fork;
132621: sleeve; 13262: second universal joint fork; 13263: cross shaft; 1327: gear rod; 13271: guide groove; 13272: first boss;
13273: second boss; 13274: annular groove; 133: adjustment button; 1331: first mounting groove; 13311: slot; 134: limiting assembly;
1341: elastic arm; 13411: protrusion; 1342: fastening bracket; 1343: limiting cover; 1344: limiting hole; 1346: spring plate; 13461: fastening portion;
13462: first elastic stub; 134621: first accommodating groove; 134622: second accommodating groove; 134623: limiting protrusion;
13463: second elastic stub; 1347: rotating member; 13471: rotating portion; 13472: first rotating arm; 134721: first limiting pole;
13473: second rotating arm; 134731: second limiting pole; 135: follower; 1351: second mounting groove; 13511: protruding portion;
135111: special-shaped groove; 1352: protruding block; 136: mounting base; 1361: first base body; 1362: second base body; 13621: mounting hole;
140: button;
150: sensor;
200: fastening assembly.

### DESCRIPTION OF EMBODIMENTS

To make the objectives, technical solutions, and advantages of this application clearer, the following further describes embodiments of this application in detail with reference to accompanying drawings. However, example implementations may be implemented in a plurality of forms, and should not be construed as being limited to implementations described herein. Identical reference numerals in the accompanying drawings indicate identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

It should be noted that specific details are described in the following description to facilitate understanding of this application. However, embodiments of this application can be implemented in a plurality of manners different from those described herein, and a person skilled in the art can perform similar promotion without departing from the connotation of embodiments of this application. Therefore, this application is not limited to the specific implementations disclosed below.

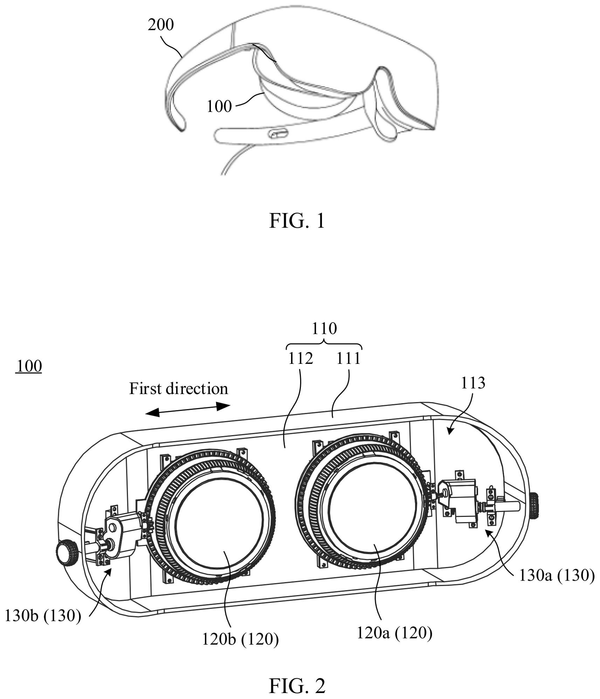

FIG. 1 is a diagram of a structure of a head-mounted display device according to an embodiment of this application. In this embodiment of this application, the head-mounted display device may be an augmented reality (augmented reality, AR) display device, a virtual reality (virtual reality, VR) display device, or a mixed reality (mixed reality, MR) display device, for example, VR glasses, a VR helmet, AR glasses, an AR helmet, MR glasses, or an MR helmet. A user may wear the head-mounted display device to play a game, read, watch a movie (or a TV series), participate in a virtual conference, participate in video education, perform video shopping, or the like. The head-mounted display device in the embodiment shown in FIG. 1 is described by using the VR glasses as an example.

The head-mounted display device may include a display module 100 and a fastening assembly 200. The display module 100 may be configured to display an image. In specific implementation, the image displayed by the display module 100 may be an image projected by a terminal device (for example, a mobile phone or a tablet computer) onto the display module 100, or may be an image formed by the display module 100. The fastening assembly 200 may be configured to support the display module 100, and fasten the display module 100 in front of eyes of the user when the user wears the head-mounted display device.

For example, the fastening assembly 200 may include two frame temples, the two frame temples are respectively connected to two sides of the display module 100, to jointly form, with the display module 100, wearing space for accommodating the head of the user; or the fastening assembly 200 may be a fastening band, the fastening band may include at least two end portions, the two end portions of the fastening band are respectively connected to two sides of the display module 100, so that wearing space for accommodating the head of the user may also be formed between the fastening band and the display module 100; or the fastening assembly 200 may be a headband or a helmet housing.

FIG. 2 is a diagram of a structure of a display module 100 according to an embodiment of this application. In this embodiment of this application, the display module 100 may include a housing 110, a display assembly 120, and an adjustment mechanism 130. Both the display assembly 120 and the adjustment mechanism 130 are mounted in the housing 110. There are two display assemblies 120, and the two display assemblies 120 may respectively provide image display for the left eye and the right eye of the user. Alternatively, there may be two adjustment mechanisms 130, the two adjustment mechanisms 130 are disposed in a one-to-one correspondence with the two display assemblies 120. Each adjustment mechanism 130 may be configured to adjust information such as a display mode and a position of a corresponding display assembly. In this way, the user implements functions such as interaction with the head-mounted display device, nearsightedness/farsightedness adjustment, or pupillary distance adjustment by operating the adjustment mechanism 130.

In this embodiment, the display module 120 may further include a circuit board (not shown in the figure). The circuit board may be configured to dispose a processor, a memory, a communication module, and the like. The processor is configured to control an overall operation of the head-mounted display device, and may include one or more processing units. For example, the processor may include an application processor (application processor, AP), a modem processor, a graphics processing unit (graphics processing unit, GPU), an image signal processor (image signal processor, ISP), a video processing unit (video processing unit, VPU), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The memory may be configured to store instructions and data. The communication module may be configured to implement a communication function between the head-mounted display device and an external device. In addition, the display module may further include apparatuses such as a battery, a camera, and a microphone.

Still refer to FIG. 2. The housing 110 may include a frame 111 and a cover plate 112. The cover plate 112 may be fastened in the frame 111, and the cover plate 112 and the frame 111 are enclosed to form accommodating space 113. For example, the frame 111 and the cover plate 112 may be an integrated structure, or the frame 111 and the cover plate 112 may be separately formed and then fastened to each other in a manner, for example, riveting or bonding.

To enable the display module 100 to better fit the face of the user, two ends of the frame 111 in the width direction of the frame 111 may be bent relative to a body portion of the frame 111. In a process in which the user wears the head-mounted display device, the body portion of the frame 111 is opposite to the front face of the face of the user, bending portions at two ends of the frame are opposite to the side surface of the face of the user. In addition, the housing 110 may further include a mask (not shown in the figure). The mask may be fastened to the frame 111. When the user wears the head-mounted display device, the mask is located on a side that is of the display module 100 and that faces the face of the user, and the mask can fit the face of the user. In this way, wearing comfort of the user can be improved, and the accommodating space 113 of the housing 110 can have effect similar to an anechoic chamber. This helps improve display effect of the head-mounted display device.

For ease of description, in this embodiment of this application, the two display assemblies 120 may be respectively referred to as a first display assembly 120a and a second display assembly 120b. Correspondingly, an adjustment mechanism 130 corresponding to the first display assembly 120a is referred to as a first adjustment mechanism 130a, and an adjustment mechanism 130 corresponding to the second display assembly 120b is referred to as a second adjustment mechanism 130b.

The first display assembly 120a and the second display assembly 120b are located in the accommodating space 113 of the housing 110, and the first display assembly 120a and the second display assembly 120b are arranged in a first direction. The first direction may be understood as a width direction of the head-mounted display device. Alternatively, it may be understood as an arrangement direction of two eyes of the user in a process in which the user wears the head-mounted display device. One portion of the first adjustment mechanism 130a may be located in the accommodating space 113, to facilitate connection to the first display assembly 120a. The other portion of the first adjustment mechanism 130a is located outside the accommodating space 113, to facilitate a user operation. Similarly, one portion of the second adjustment mechanism 130b may alternatively be located in the accommodating space 113, and the other portion is located outside the accommodating space 113.

In the following embodiments, the display module 100 is mainly described by using the first display assembly 120a and the first adjustment mechanism 130a as an example. The second display assembly 120b and the second adjustment mechanism 130b may be disposed with reference to the first display assembly 120a and the first adjustment mechanism 130a respectively.

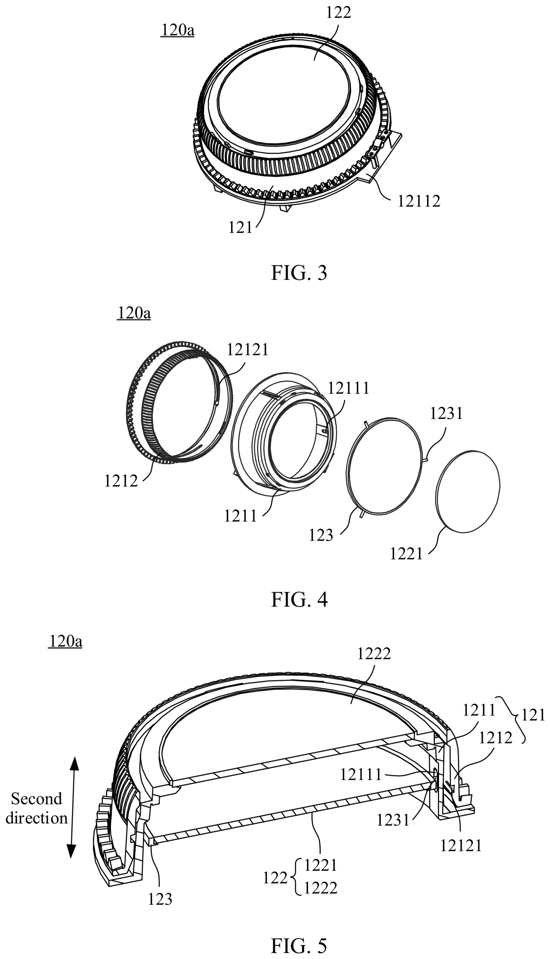

Refer to FIG. 3 and FIG. 4 together. FIG. 3 is a diagram of a structure of the first display assembly 120a according to this embodiment of this application. FIG. 4 is a partial exploded diagram of the first display assembly 120a according to this embodiment of this application. In this embodiment of this application, the first display assembly 120a may include a lens barrel 121, a display (not shown in the figure), and a lens group 122. An axial direction of the lens barrel 122 extends in a second direction, and the second direction may be understood as a thickness direction of the display module, or may be understood as a direction in which the user approaches or moves away from the eyes of the user in a process in which the user wears the head-mounted display device. Both the lens group 122 and the display may be disposed in the lens barrel 121, and the display is located on a side that is of the lens group 122 and that faces the cover plate. In other words, when the user wears the head-mounted display device, the display is located on a side that is of the lens group 122 and that is away from the glasses of the user.

In this embodiment of this application, the display may be a micro organic light-emitting diode (micro organic light-emitting diode, micro OLED) display, a silicon-based OLED, a liquid crystal display (liquid crystal display, LCD), a micro light emitting diode (micro light emitting diode, micro LED), or another display apparatus. This is not specifically limited in this application.

In this embodiment of this application, the lens group 122 may include a first lens 1221. A surface type of the first lens 1221 may be designed as a concave lens or a convex lens based on a requirement. For example, in an implementation, the first lens 1221 is a concave lens. In this case, the first lens 1221 may be used as a nearsighted lens, so that the first display assembly 120a implements a function of correcting vision of a nearsighted user, and the head-mounted display device meets a use requirement of the nearsighted user. In another implementation, the first lens 1221 is a convex lens. In this case, the first lens 1221 may be used as a farsighted lens, so that the first display assembly 120a has a function of correcting vision of a farsighted user, and the head-mounted display device meets a use requirement of the farsighted user.

In some embodiments, the first lens 1221 may be slidably disposed on the lens barrel 121 in the second direction. In this way, a relative distance between the first lens 1221 and the eye of the user can be changed by moving a position of the first lens 1221, so that a focal length of the eye of the user can be adjusted. It is easy to understand that focal lengths of eyes with different nearsightedness or farsightedness degrees are different. Based on the foregoing adjustment function, the first display assembly 120a may adjust focal lengths of eyes of users with different nearsightedness or farsightedness degrees to the retina, which is equivalent to that the first display assembly 120a implements effect of a nearsighted lens or a farsighted lens with different degrees, so that a user group of the head-mounted display device can be effectively extended, and user experience can be improved.

In this embodiment, the first display assembly 120a may further include a lens support 123. The lens support 123 is approximately of an annular structure. The first lens 1221 may be fastened to the lens support, and the lens support 123 may be slidably disposed in the lens barrel 121 in the second direction, so that the position of the first lens 1221 is adjusted by moving the lens support 123, to reduce difficulty in slidable connection between the first lens 1221 and the lens barrel 121.

For example, the first lens 1221 may be fastened to an inner wall of the lens support 123. To improve connection reliability between the first lens 1221 and the lens support 123, the inner wall of the lens support 123 is provided with a step surface, and an edge of the first lens 1221 is fastened to the step surface. In addition, the first lens 1221 and the lens support 123 may be fastened through bonding, but this is not limited.

Still refer to FIG. 3 and FIG. 4. The lens barrel 121 may include a first barrel body 1211 and a second barrel body 1212. The second barrel body 1212 is sleeved on an outside of the first barrel body 1211, and the lens support 123 may be specifically slidably disposed in the first barrel body 1211. One or more sliding pins 1231 may be disposed on a peripheral side of the lens support 123, and the sliding pin 1231 extends in a radial direction of the lens support 123. Correspondingly, one or more sliding rails 12111 extending in the second direction may be disposed on the first barrel body 1211, the sliding rails 12111 may be disposed in a one-to-one correspondence with the sliding pins 1231 of the lens support 123, each sliding pin 1231 may be slidably disposed in a corresponding sliding rail 12111, and an end portion of the sliding pin 1231 may extend from the inside of the sliding rail 12111 to the outside of the first barrel body 1211.

One or more sliding slots 12121 may be disposed on an inner wall of the second barrel body 1212, and the sliding slots 12121 may also be disposed in a one-to-one correspondence with the sliding pins 1231 of the lens support 123. The sliding slot 12121 may extend in a circumferential direction of the second barrel body, and the sliding slot 12121 gradually extends from a side away from the display to a side close to the display. Therefore, in this embodiment, the sliding slot 12121 may be considered as a spiral structure that rotates in the circumferential direction of the second barrel body 1212. In addition, when there are a plurality of sliding slots 12121, the plurality of sliding slots 12121 are distributed in the circumferential direction of the second barrel body, and the plurality of sliding slots 12121 have a same spiral direction. In this case, ends that are of the plurality of sliding slots 12121 and that are away from the display are roughly on a same plane in the second direction, and ends that are of the plurality of sliding slots 12121 and that are close to the display are also roughly on a same plane in the second direction.

Refer to FIG. 4 and FIG. 5 together. FIG. 5 is a diagram of a cross-sectional structure of the first display assembly 120a according to this embodiment of this application. As described above, the sliding pin 1231 of the lens support 123 is assembled in the sliding rail 12111 of the first barrel body 1211, and the end portion of the sliding pin 1231 may extend from the inside of the sliding rail 12111 to the outside of the first barrel body 1211. In a specific implementation, an end portion of the sliding pin 1231 may be assembled in a corresponding sliding slot 12121 of the second barrel body 1212. In other words, there is a relative motion relationship between the lens support 123 and each of the first barrel body 1211 and the second barrel body 1212. By rotating the second barrel body 1212, the end portion of the sliding pin 1231 may slide in the sliding slot 12121 of the second barrel body 1212, and there is a movement trend of spiral rising (which may be understood as a direction close to the display) or spiral falling (which may be understood as a direction away from the display). However, due to a limitation of the sliding rail 12111 of the first barrel body 1211, the lens support 123 moves only in the second direction under driving of the second barrel body 1212. In this way, position adjustment of the lens support 123 and the first lens 1221 carried on the lens support 123 is implemented in the second direction.

In some embodiments, the lens group 122 may further include a second lens 1222. The second lens 1222 may be fastened in the first barrel body 1211, and the second lens 1222 is located on a side that is of the first lens 1221 and that faces away from the display. In a specific design, the second lens 1222 may be a convex lens. In a process in which the user wears the head-mounted display device, because an eye of the user is excessively close to the display, it is difficult to clearly see a display picture of the display. However, an angle of a light source of the crystalline lens of the eye of the user can be corrected by configuring the second lens 1222, so that the user can clearly see a display picture of the display.

For example, the second lens 1222 may be fastened to an inner wall of the first barrel body 1211. To improve connection reliability between the second lens 1222 and the first barrel body 1211, the inner wall of the first barrel body 1211 may be provided with a step surface, and an edge of the second lens 1222 may be fastened to the step surface. In addition, the second lens 1222 and the first barrel body 1211 may be fastened through bonding, but this is not limited.

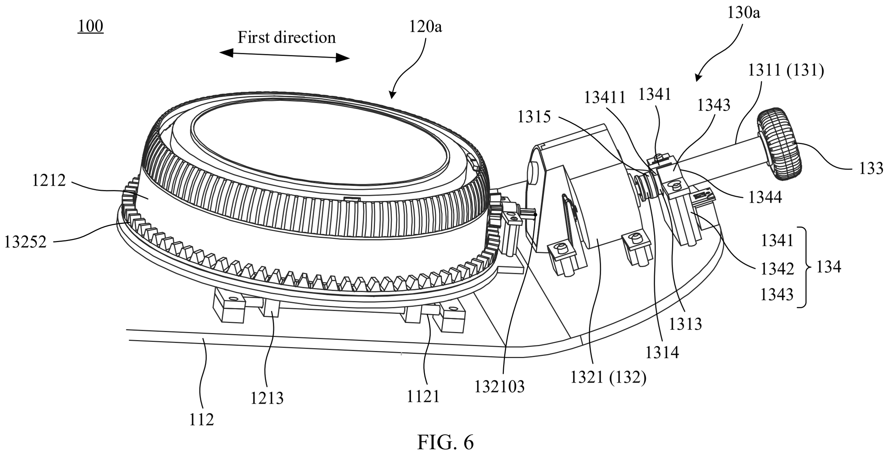

FIG. 6 is a diagram of a partial structure of a display module 100 according to an embodiment of this application. The figure shows a partial structure of the display module 100 on sides of a first display assembly 120a and a first adjustment mechanism 130a, and the first adjustment mechanism 130a may be located on a side that is of the first display assembly 120a and that is away from the second display assembly. In this embodiment of this application, a first guide rail 1121 may be disposed on a surface that is of the cover plate 112 and that faces the accommodating space, the first guide rail 1121 is fastened to the cover plate 112 in the first direction, and the first display assembly 120a is slidably disposed on the first guide rail 1121. In specific implementation, one end that is of the lens barrel 121 of the first display assembly 120a and that faces the cover plate 112 has a convex lug 1213, the convex lug 1213 is provided with a hole, and the first guide rail 1121 may penetrate the hole, so that the first display assembly 120a is slidably assembled on the first guide rail 1121 through cooperation between the convex lug 1213 and the first guide rail 1121. In this embodiment, the display assembly is slidably assembled on the cover plate 112 in the first direction, and a distance between two display assemblies can be changed, so that the head-mounted display device can implement a pupillary distance adjustment function, thereby meeting use requirements of user groups with different pupillary distances, and improving user experience.

The convex lug 1213 may be disposed on an end face of the first barrel body 1211. To provide sufficient mounting space for the convex lug 1213, a flange 12112 may be disposed at an end that is of the first barrel body 1211 and that faces the cover plate 112, and the convex lug 1213 may be specifically disposed on a surface that is of the flange 12112 and that faces the cover plate 112. The convex lug 1213 and the first barrel body 1211 may be an integrated structure, or the convex lug 1213 and the first barrel body 1211 may be separately formed and then fastened to each other in a manner, for example, bonding. In addition, after the first barrel body 1211 and the second barrel body 1212 are assembled, the second barrel body 1212 may be located on a side that is of the flange 12112 of the first barrel body 1211 and that faces away from the cover plate 112.

To improve sliding stability of the first display assembly 120a relative to the cover plate 112, a plurality of first guide rails 1121 may be disposed on the cover plate 112. The plurality of first guide rails 1121 may be arranged in a third direction. Herein, the third direction may be understood as a height direction of the head-mounted display device, or it may be understood as a length direction of the face of the user in a process in which the user wears the head-mounted display device. Correspondingly, a plurality of groups of convex lugs 1213 may be disposed on the end face of the first barrel body 1211, the plurality of groups of convex lugs 1213 are disposed in a one-to-one correspondence with the plurality of first guide rails 1121, each group of convex lugs 1213 may include one or more convex lugs 1213, and each convex lug 1213 in each group of convex lugs 1213 is separately slidably connected to one corresponding first guide rail 1121.

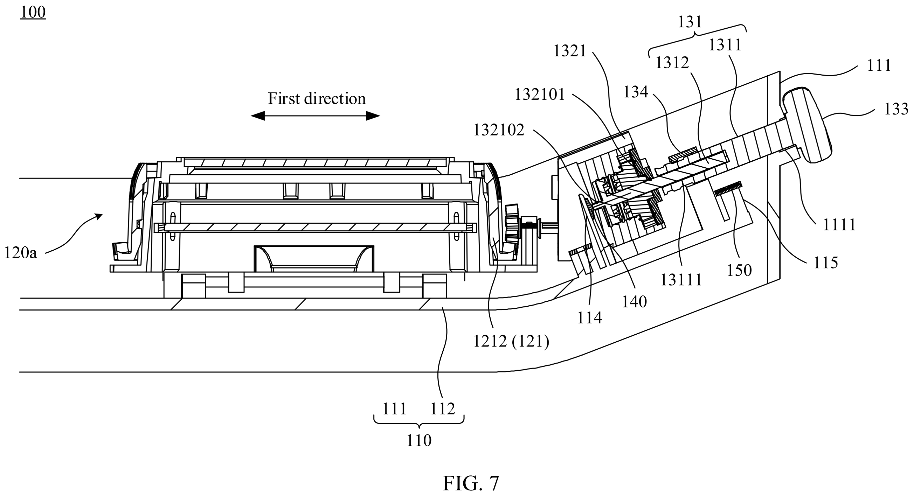

Refer to FIG. 6 and FIG. 7 together. FIG. 7 is a diagram of a partial cross-sectional structure of the display module 100 shown in FIG. 6. The first adjustment mechanism 130a includes an adjustment rod 131 and a transmission assembly 132. A first end of the adjustment rod 131 may extend out of the housing 110 from the first through hole 1111 disposed on the frame 111, a second end of the adjustment rod 131 is located inside the housing, and the adjustment rod 131 may slide along the first through hole 1111. The first through hole 1111 may be disposed on a side wall that is of the frame 111 and that is close to the first display assembly 120a, that is, a side wall that is of the frame 111 and that is in the first direction. As described above, two ends of the frame 111 in the first direction are bent portions. Therefore, to enable the adjustment rod 131 to have sufficient mounting space, there may be a specific included angle between a sliding direction of the adjustment rod 131 and the first direction, and the included angle may be approximately equal to a bending angle of the bent portion of the frame 111 relative to a main portion of the frame 111. The transmission assembly 132 is located inside the housing, and the transmission assembly 132 may be in transmission connection to the lens barrel 121 of the first display assembly 120a. For example, the transmission assembly 132 may be in transmission connection to the second barrel body 1212 of the lens barrel 121.

In some embodiments, an adjustment button 133 may be disposed at the first end of the adjustment rod 131, and the user may control the first adjustment mechanism 130a by operating the adjustment button 133. Parameters such as a diameter and a thickness of the adjustment button 133 may be designed based on human factors, to reduce operation difficulty of the user.

In addition, in this embodiment of this application, the adjustment rod 131 may be an integrated structure, or may be a split structure. For example, in the embodiment shown in FIG. 7, the adjustment rod 131 may include a first rod body 1311 and a second rod body 1312, a diameter of the first rod body 1311 is greater than a diameter of the second rod body 1312, one end of the first rod body 1311 may form the first end of the adjustment rod 131, and an end face of the other end of the first rod body 1311 may have a groove 13111 extending in a length direction of the first rod body 1311; and one end of the second rod body 1312 may form a second end of the adjustment rod 131, and the other end of the second rod body 1312 may be assembled in the groove 13111 of the first rod body 1311, so that the second rod body 1312 is fastened to the first rod body 1311. In this way, the adjustment button 133 may be mounted on the adjustment rod 131 via the first rod body 1311, and implement transmission connection to the transmission assembly 132 via the second rod body 1312. This split-body structure design can reduce difficulty in assembling the adjustment rod 131 and the transmission assembly 132. In addition, because a radial size of the second rod body 1312 is small, the transmission assembly 132 may also cooperate with the second rod body 1312 in a small size. This helps reduce space occupied by the first adjustment mechanism 130a in the housing 110.

For example, an inner wall of the groove 13111 of the first rod body 1311 may have an inner thread. Correspondingly, an outer wall of a portion that is of the second rod body 1312 and that is assembled in the groove 13111 may have an outer thread. In this way, the first rod body 1311 and the second rod body 1312 are fastened to each other in a threaded connection manner. Certainly, in some other implementations, the first rod body 1311 and the second rod body 1312 may alternatively be fastened to each other in a manner, for example, key connection, interference fit, or bonding.

Still refer to FIG. 7. In this embodiment of this application, the adjustment rod 131 may have two different states, the adjustment rod 131 may slide along the first through hole 1111 to implement switching between the two states, and corresponding to the two states of the adjustment rod 131, the first adjustment mechanism 130a may implement different adjustment functions. For ease of description, in the following, a state in which the adjustment rod 131 is indented into the housing 110 is referred to as a first state, and a state in which the adjustment rod 131 is out of the housing 110 is referred to as a second state. It is easy to understand that, when the adjustment rod 131 is in the first state, a distance between the adjustment button 133 and the outer wall of the frame 111 is closer. Therefore, the adjustment rod 131 may be switched from the first state to the second state by pulling the adjustment button 133 outside the housing 110. On the contrary, when the adjustment rod 131 is in the second state, the adjustment rod 131 may be switched from the second state to the first state by pressing the adjustment button 133 inside the housing 110.

In this embodiment of this application, the adjustment rod 131, in the first state, is disconnected from the transmission assembly 132, and in this state, the user may interact with the head-mounted display device by operating the adjustment rod 131. The adjustment rod 131, in the second state, is in transmission connection to the transmission assembly 132, and in this state, the user may operate the adjustment rod 131 to transmit torque to the transmission assembly 132, to transmit the torque to the lens barrel 121 of the first display assembly 120a via the transmission assembly 132.

To enable the adjustment rod 131 to stably and reliably remain in the first state or the second state, the first adjustment mechanism 130a may further include a limiting assembly 134 configured to limit the adjustment rod 131. The following describes a structure of a possible limiting assembly 134 provided in an embodiment of this application by using an example.

Still refer to FIG. 6 and FIG. 7. In this embodiment, the limiting assembly 134 includes an elastic arm 1341. One end of the elastic arm 1341 is fastened relative to the housing 110, and the other end of the elastic arm 1341 is provided with a protrusion 13411 disposed toward the adjustment rod 131. A peripheral side of the adjustment rod 131 includes a first limiting groove 1313 and a second limiting groove 1314. The first limiting groove 1313 is located on a side that is of the second limiting groove 1314 and that is close to the adjustment button 133, a limiting step 1315 may be formed between the first limiting groove 1313 and the second limiting groove 1314. In specific implementation, the first limiting groove 1313 and the second limiting groove 1314 may be disposed on the first rod body 1311, or may be disposed on the second rod body 1312. This is not limited in this application. FIG. 6 shows a case in which both the first limiting groove 1313 and the second limiting groove 1314 are disposed on the first rod body 1311. In addition, both the first limiting groove 1313 and the second limiting groove 1314 may be annular grooves, and the limiting step 1315 formed between the first limiting groove 1313 and the second limiting groove 1314 is an annular step.

The protrusion 13411 of the elastic arm 1341 may be limited in the first limiting groove 1313 or the second limiting groove 1314. When the protrusion 13411 of the elastic arm 1341 is limited in the first limiting groove 1313, the adjustment rod 131 is in the first state. In this case, if the adjustment rod 131 is subject to a pulling force and moves toward the outside of the housing 110, the elastic arm 1341 deforms, and the protrusion 13411 of the elastic arm 1341 may move to the second limiting groove 1314 through the limiting step 1315, to adjust the adjustment rod 131 to the second state. When the protrusion 13411 of the elastic arm 1341 is limited in the second limiting groove 1314, the adjustment rod 131 is in the second state. In this case, if the adjustment rod 131 is subject to a pressing force and moves toward the inside of the housing 110, the elastic arm 1341 deforms, and the protrusion 13411 of the elastic arm 1341 may move inside the first limiting groove 1313 through the limiting step 1315, to adjust the adjustment rod 131 to the first state.

In addition, to reduce a risk that the protrusion 13411 of the elastic arm 1341 is stuck in the first limiting groove 1313 or the second limiting groove 1314, the adjustment rod 131 can smoothly switch between the first state and the second state, chamfering or rounding processing may be separately performed on two end faces of two sides of the protrusion 13411 in the axial direction of the adjustment rod 131. Alternatively, a surface of the protrusion 13411 may be designed as an arc-shaped surface. Correspondingly, chamfering or rounding processing may also be separately performed on the end faces of the two sides of the limiting step 1315.

In some embodiments, the limiting assembly 134 may include a fastening bracket 1342 and a limiting cover 1343. The fastening bracket 1342 may be fastened to an inner wall of the housing 110, for example, may be fastened to an inner wall of the cover plate 112 or an inner wall of the frame 111, the limiting cover 1343 covers an end portion that is of the fastening bracket 1342 and that is away from the inner wall of the housing 110. For example, the limiting cover 1343 may be fastened to the fastening bracket 1342 via a fastener. A groove may be disposed on an end that is of the fastening bracket 1342 and that faces the limiting cover 1343, a groove may also be disposed on a side that is of the limiting cover 1343 and that faces the fastening bracket, the groove of the fastening bracket 1342 and the groove of the limiting cover 1343 are disposed opposite to each other, the two grooves may be jointly enclosed to form a limiting hole 1344, and an axis of the limiting hole 1344 and an axis of the first through hole 1111 may be approximately coaxially disposed. The adjustment rod 131 may penetrate the limiting hole 1344.

In an implementation, the elastic arm 1341 may be disposed on the limiting cover 1343, the elastic arm 1341 extends in the axial direction of the adjustment rod 131, one end of the elastic arm 1341 is fastened to the limiting cover 1343, and the protrusion 13411 is located at the other end of the elastic arm 1341 and is disposed toward the limiting hole 1344. In another implementation, the elastic arm 1341 may be disposed on the fastening bracket 1342, one end of the elastic arm 1341 is fastened to the fastening bracket 1342, and the protrusion 13411 is located at the other end of the elastic arm 1341 and is disposed toward the limiting hole 1344.

After a manner of switching the adjustment rod 131 between the first state and the second state and a limiting function of the limiting assembly 134 on the adjustment rod 131 are understood, the following specifically describes adjustment functions of the adjustment rod 131 in the two states.

Refer to FIG. 6 again. The display module 100 may include one or more electrical components, and these electrical components are all disposed inside the housing 110. The electrical component may be connected to the circuit board of the display module 100 through a conducting wire, and is further connected to the processor through a trace disposed on the circuit board. The conducting wire used to connect the electrical component and the circuit board may be a cable, or may be a flexible circuit board (flexible printed circuit board, FPC). Both the cable and the FPC may adapt to trace space in the housing 110 through deformation, to reduce difficulty in connecting the electrical component and the circuit board. The adjustment rod 131 may be configured to trigger the one or more electrical components when the adjustment rod 131 is pressed or rotated in the first state, so that the electrical component sends a signal to the processor, and the processor performs a corresponding function based on the received signal.

In some embodiments, the one or more electrical components may include a button 140, and the button 140 may be disposed toward the second end of the adjustment rod 131. The button 140 may be triggered in a pressed state, and the processor may perform a corresponding function, for example, trigger a control, after the processor receives a signal triggered by the button 140. For example, the button 140 may be a DOME button. In addition, to fasten a position of the button 140, a first support arm 114 may be disposed in the housing 110, and the first support arm 114 may be fastened to the inner wall of the housing 110, for example, the inner wall of the cover plate 112 or the inner wall of the frame 111. An end portion that is of the first support arm 114 and that is away from the inner wall of the housing 110 is disposed close to the second end of the adjustment rod 131, and the button 140 may be disposed at the end of the first support arm 114.

In a specific implementation, a length of the first limiting groove 1313 in the axial direction of the adjustment rod 131 is greater than a length of the protrusion 13411 of the elastic arm 1341 in the axial direction of the adjustment rod 131. In this way, when the adjustment rod 131 is in the first state: The adjustment rod 131 may generate slight displacement under a pressing action. When the adjustment rod 131 is in the first state and is not pressed, there may be a specific gap between the second end of the adjustment rod 131 and the button 140. When the adjustment rod 131 is pressed, the second end of the adjustment rod 131 may trigger the button 140, to input a button signal.

Still refer to FIG. 6. In some embodiments, the one or more electrical components may further include a sensor 150. The sensor 150 may be configured to detect a rotation signal of the adjustment rod 131. The rotation signal may be a rotation angle. The processor may obtain a rotation signal detected by the sensor 150, and perform a corresponding function based on the rotation signal, for example, volume increase/decrease and menu switching.

Further, the processor may be configured to: first determine a state of the adjustment rod 131, and when determining that the adjustment rod 131 is in the first state, obtain the rotation signal detected by the sensor 150. In other words, in a process in which the user wears the head-mounted display device, after adjusting the adjustment rod 131 to the first state, the user may perform corresponding interaction with the head-mounted display device by rotating the adjustment button 133.

In addition, in this embodiment, a second support arm 115 may be further disposed in the housing 110. Similar to the first support arm 114, the second support arm 115 may also be fastened to the inner wall of the housing 110, for example, the inner wall of the cover plate 112 or the inner wall of the frame 111, an end that is of the second support arm 115 and that is away from the inner wall of the housing 110 may be disposed close to the peripheral side of the adjustment rod 131, the sensor 150 may be disposed at the end of the second support arm 115, and there is a specific spacing between the sensor 150 and the peripheral side of the adjustment rod 131. For example, the second support arm 115 may be located on a side that is of the limiting assembly 134 and that is close to the first end of the adjustment rod 131.

An outer wall of the adjustment rod 131 may include a plurality of areas distributed in a circumferential direction, and surface roughness of the plurality of areas is different from each other. In an implementation, the plurality of areas may be specifically located on an outer wall of the first rod body 1311. A surface that is of the sensor 150 and that faces the adjustment rod 131 includes a light source and a photosensitive area. The light source may be configured to emit light to the adjustment rod 131, so that the light is reflected on an outer wall of the adjustment rod 131. The photosensitive area may be used to receive the reflected light. Because roughness of each area on the outer wall of the adjustment rod 131 is different, reflection degrees for the roughness are also different from each other. When light is reflected by different areas of the adjustment rod 131, reflected light received by the photosensitive area is also different. For example, wavelengths of reflected light in different areas are different.

In some implementations, a chip may be integrated into the sensor 150. The chip may determine, based on reflected light received by the photosensitive area, an area in which the light is reflected on the adjustment rod 131, and then may calculate an approximate rotation angle of the adjustment rod 131. It should be noted that, in a circumferential direction of the adjustment rod 131, each area of the outer wall of the adjustment rod 131 has a specific arc length. When the adjustment rod 131 rotates slightly, the light source may be emitted to a same area of the outer wall of the adjustment rod 131 before and after the rotation. In this case, the rotation angle calculated by the chip does not change. Certainly, to improve detection precision of the sensor 150, in the circumferential direction of the adjustment rod 131, an arc length of each area on the outer wall of the adjustment rod 131 may be as small as possible.

Still refer to FIG. 6 and FIG. 7. In this embodiment of this application, the transmission assembly 132 may transmit torque via a plurality of stages of gear pairs. In a torque transmission direction, a first stage of gear pair in the plurality of stages of gear pairs may be configured to: be in transmission connection to the adjustment rod 131 in a meshed state, and be disconnected from the adjustment rod 131 in a non-meshed state, and the last stage of gear pair in the plurality of stages of gear pairs may be configured to be in transmission connection to the second barrel body 1212 of the lens barrel 121. In this way, torque of the adjustment rod 131 can be sequentially transmitted to the second barrel body 1212 through all stages of gear pairs, to drive the second barrel body 1212 to rotate.

In addition, the transmission assembly 132 may include a box 1321, and at least one stage of gear pair of the transmission assembly 132 may be mounted in the box 1321. The box 1321 is further provided with lubricant oil, to lubricate the gear pair through the lubricant oil, thereby reducing wear of the transmission assembly 132. A first hole 132101 and a second hole 132102 may be respectively disposed on two end faces of the box 1321 in the axial direction of the adjustment rod 131, the adjustment rod 131 is partially located in the box 1321, the first end of the adjustment rod 131 extends outward through the first hole 132101, and the second end of the adjustment rod 131 extends outward through the second hole 132102. An oil seal may be disposed at each of the first hole 132101 and the second hole 132102, to reduce a risk of lubricating oil leakage in the box 1321.

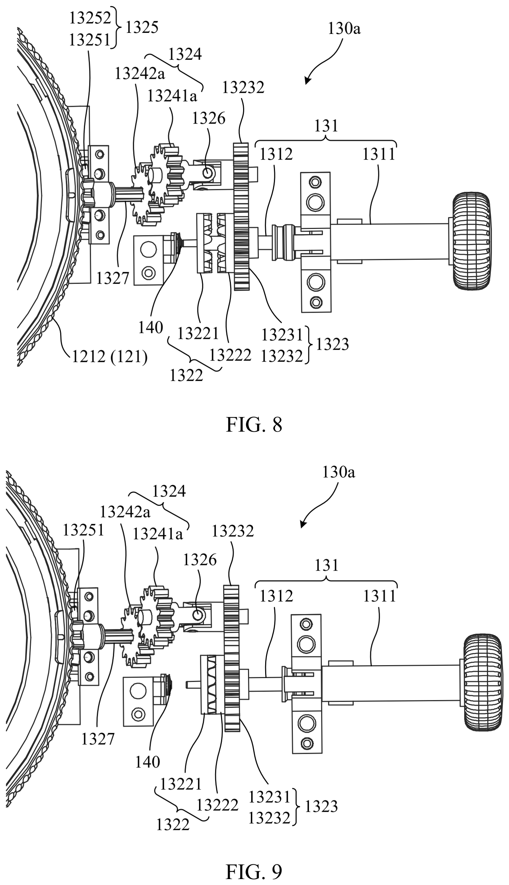

Refer to FIG. 8 and FIG. 9 together. FIG. 8 is a diagram of a structure of a first adjustment mechanism 130a in a state according to an embodiment of this application. FIG. 9 is a diagram of a structure of a first adjustment mechanism 130a in another state according to an embodiment of this application. In this embodiment, in a power transmission direction, the transmission assembly 132 may include a first stage of gear pair 1322, a second stage of gear pair 1323, a third stage of gear pair 1324, and a fourth stage of gear pair 1325, and the fourth stage of gear pair 1325 is the last stage of gear pair of the transmission assembly 132. The following separately describes all stages of gear pairs.

The first stage of gear pair 1322 includes a first gear 13221 and a second gear 13222, both the first gear 13221 and the second gear 13222 may be sleeved on the adjustment rod 131, and the second gear 13222 is located on a side that is of the first gear 13221 and that is close to the first end of the adjustment rod 131. The first gear 13221 is fastened to the adjustment rod 131, the second gear 13222 is in clearance fit with the adjustment rod 131, and the second gear 13222 may be rotatably assembled in the box. The first gear 13221 and the second gear 13222 may be end-face gears, a gear tooth of the first gear 13221 is disposed on an end face of a side that is of the first gear 13221 and that faces the second gear 13222, a gear tooth of the second gear 13222 is disposed on an end face of a side that is of the second gear 13222 and that faces the first gear 13221. When the adjustment rod 131 is in the first state, there is a specific spacing between the gear tooth of the first gear 13221 and the gear tooth of the second gear 13222, and the first gear 13221 is not meshed with the second gear 13222. When the adjustment rod 131 is pulled to the second state, the first gear 13221 moves in a direction close to the second gear 13222 with the adjustment rod, and the first gear 13221 is meshed with the second gear 13222. In addition, to ensure that the first gear 13221 is smoothly connected to the second gear 13222, an addendum of the gear tooth of the first gear 13221 may use an arc surface for transition, an addendum of the gear tooth of the second gear 13222 may also use an arc surface for transition.

The second stage of gear pair 1323 includes a third gear 13231 and a fourth gear 13232. The third gear 13231 may be fastened to the second gear 13222, the third gear 13231 may be sleeved on the adjustment rod 131, the third gear 13231 is located on a side that is of the second gear 13222 and that is away from the first gear 13221, and the third gear 13231 may also be in clearance fit with the adjustment rod 131. For example, the third gear 13231 and the second gear 13222 may be an integrated structure. The fourth gear 13232 may be located on a side of the third gear 13231 in a circumferential direction, and the fourth gear 13232 is rotatably assembled in the box. The third gear 13231 and the fourth gear 13232 each may be a cylindrical gear, and the third gear 13231 and the fourth gear 13232 are meshed with each other through gear teeth disposed on respective peripheral sides.

The third stage of gear pair 1324 includes a fifth gear 13241a and a sixth gear 13242a. Both the fifth gear 13241a and the sixth gear 13242a may be rotatably assembled in the box, the fifth gear 13241a may be in transmission connection to the fourth gear 13232 via a universal joint 1326, and the sixth gear 13242a is located on a side of a peripheral side of the fifth gear 13241a. The fifth gear 13241a and the sixth gear 13242a each may be a cylindrical gear, and the fifth gear 13241a and the sixth gear 13242a are meshed with each other through gear teeth disposed on respective peripheral sides. In this solution, the fourth gear 13232 is connected to the fifth gear 13241a via the universal joint 1326, and variable-angle power transmission can be implemented between the fourth gear 13232 and the fifth gear 13241a, that is, the transmission assembly 132 implements variable-angle power transmission. In this way, not only a structure of the transmission assembly 132 can be simplified, but also a requirement on disposing positions of a start end (the adjustment rod 131) and a tail end (the second barrel body 1212) of power transmission of the entire device can be reduced, thereby helping implement a miniaturization design of the head-mounted display device.

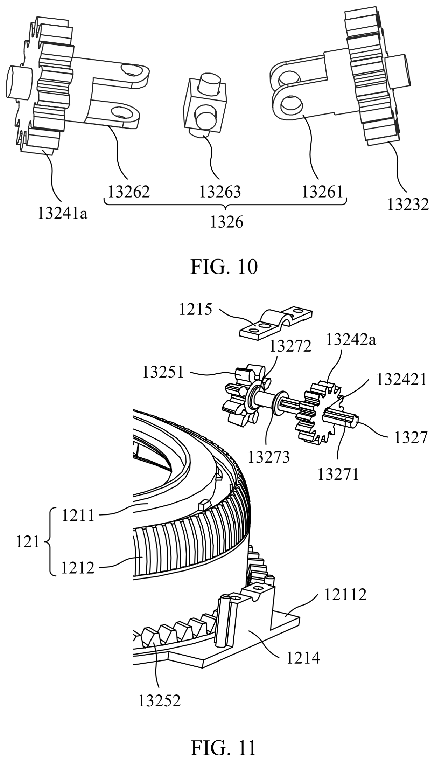

FIG. 10 is a diagram of a structure of the universal joint shown in FIG. 8. In this embodiment, the universal joint 1326 may include a first universal joint fork 13261, a second universal joint fork 13262, and a cross shaft 13263. The first universal joint fork 13261 is fastened to one end face of the fourth gear 13232, the second universal joint fork 13262 is fastened to one end face of the fifth gear 13241a, and two connecting shafts of the cross shaft 13263 are respectively assembled in the first universal joint fork 13261 and the second universal joint fork 13262.

Refer to FIG. 6, FIG. 8, and FIG. 9 again. The fourth stage of gear pair 1325 is a bevel gear pair, the fourth stage of gear pair 1325 includes a first bevel gear 13251 and a second bevel gear 13252, and the first bevel gear 13251 and the second bevel gear 13252 are located outside the box 1321. A third hole 132103 may be disposed in the box 1321, a gear rod 1327 is assembled in the third hole 132103, one end of the gear rod 1327 is located in the box 1321, and the other end of the gear rod 1327 is located outside the box 1321. The gear rod 1327 can slide in an axial direction of the third hole 132103, and can also rotate in the third hole 132103. The sixth gear 13242a may be assembled at one end that is of the gear rod 1327 and that is located in the box 1321, and the sixth gear 13242a may drive the gear rod 1327 to rotate. The first bevel gear 13251 may be assembled at an end that is of the gear rod 1327 and that is located outside the box 1321, and the first bevel gear 13251 is fastened to the gear rod 1327. The second bevel gear 13252 is disposed on a peripheral side of the second barrel body 1212, and the second bevel gear 13252 is fastened to the second barrel body 1212. The gear tooth of the first bevel gear 13251 may drive the second bevel gear 13252 and the second barrel body 1212 to rotate by rolling the gear tooth of the second bevel gear 13252.

The first bevel gear 13251 and the gear rod 1327 may be separately formed and then assembled and fastened, or may be an integrated structure. The second bevel gear 13252 and the second barrel body 1212 may be separately formed and then assembled and fastened, or may be an integrated structure.

Refer to FIG. 9 and FIG. 11 together. FIG. 11 is an exploded diagram of a partial structure of a lens barrel and a transmission assembly according to an embodiment of this application. In this embodiment, a guide protrusion 132421 extending in an axial direction may be disposed on an inner wall of a gear hole of the sixth gear 13242a, and a guide groove 13271 is disposed on an outer wall of the gear rod 1327. After the sixth gear 13242a is assembled on the gear rod 1327, the guide protrusion 132421 may be correspondingly assembled in a guide groove 13271. The guide protrusion 132421 cooperates with the guide groove 13271, so that the sixth gear 13242a can drive the gear rod 1327 to rotate, torque transmission between the sixth gear 13242a and the gear rod 1327 is implemented, a degree of freedom of the gear rod 1327 in the axial direction is also released, and the gear rod 1327 and the first bevel gear 13251 can move in the axial direction of the gear rod.

There may be a plurality of guide protrusions 132421 and a plurality of guide grooves 13271, the plurality of guide protrusions 132421 are distributed in a circumferential direction of the inner wall of the gear hole of the sixth gear 13242a, the plurality of guide grooves 13271 are distributed in a circumferential direction of the gear rod 1327, and the plurality of guide protrusions 132421 are assembled in the guide grooves 13271 in a one-to-one correspondence. In this design, the plurality of guide grooves 13271 in the circumferential direction of the gear rod 1327 may be considered as external splines, the plurality of guide protrusions 132421 on the inner wall of the gear hole of the sixth gear 13242a may be considered as internal splines, and a connection between the sixth gear 13242a and the gear rod 1327 is a spline connection.

In addition, a first boss 13272 and a second boss 13273 may be disposed on a peripheral side of the gear rod 1327. The first boss 13272 is disposed close to the first bevel gear 13251, and the second boss 13273 is located on a side that is of the first boss 13272 and that is away from the first bevel gear 13251. The lens barrel 121 may further include a first limiting wall 1214. The first limiting wall 1214 is disposed on a peripheral side of the lens barrel 121, and the first limiting wall 1214 and the second barrel body 1212 are spaced from each other. For example, when the flange 12112 is disposed on the first barrel body 1211, the first limiting wall 1214 may be fastened to a surface that is of the flange 12112 and that faces the second barrel body 1212. The first bevel gear 13251 may be located between the first limiting wall 1214 and an outer wall of the second barrel body 1212, so that the first bevel gear 13251 is meshed with the second bevel gear 13252 fastened to the second barrel body 1212. The first boss 13272 and the second boss 13273 of the gear rod 1327 may be respectively located on two sides of the first limiting wall 1214, and the first boss 13272 and the second boss 13273 respectively abut against the first limiting wall 1214, so that relative movement of the gear rod 1327 and the lens barrel 121 is limited via the first limiting wall 1214.

In some embodiments, the lens barrel 121 may further include a second limiting wall 1215, the second limiting wall 1215 may be fastened to a side that is of the first limiting wall 1214 and that faces away from the flange 12112, the second limiting wall 1215 and the first limiting wall 1214 may be enclosed to form a hole-shaped structure, and a portion that is of the gear rod 1327 and that is located between the first boss 13272 and the second boss 13273 is located in the hole-shaped structure. The second limiting wall 1215 and the first limiting wall 1214 jointly limit the gear rod, to help improve meshing stability between the first bevel gear 13251 and the second bevel gear 13252 in a moving process of the first display assembly.

Certainly, in some other implementations, the peripheral side of the gear rod 1327 may be further provided with an annular groove, to implement the foregoing limiting function. In this case, the first limiting wall 1214 may be partially clamped in the annular groove, and two sides of the first limiting wall 1214 respectively abut against groove walls on two sides of the annular groove. Similarly, the second limiting wall 1215 may also be partially clamped in the annular groove, and two sides of the second limiting wall 1215 respectively abut against groove walls on two sides of the annular groove. In this way, relative sliding of the gear rod 1327 and the lens barrel 121 may also be limited via the first limiting wall 1214 and the second limiting wall 1215.

When the user moves the first display assembly to adjust a pupillary distance, the first limiting wall 1214 and the second limiting wall 1215 limit the gear rod 1327, and the gear rod 1327 and the first bevel gear 13251 may move synchronously with the first display assembly. In this case, the first bevel gear 13251 and the second bevel gear 13252 may always be in a meshed state, and because the gear rod 1327 is slidably connected to the sixth gear 13242a, the sixth gear 13242a can be also always in transmission connection to the first bevel gear 13251, thereby effectively improving structural stability of the transmission assembly.

With reference to FIG. 8 and FIG. 9, it can be learned from the foregoing descriptions that, when the adjustment rod 131 is adjusted to the second state, a power transmission path of the transmission assembly 132 is as follows: The first gear 13221 receives the torque of the adjustment rod 131 and transmits the torque to the second gear 13222, the second gear 13222 transmits the torque to the third gear 13231, then, the third gear 13231 transmits the torque to the fourth gear 13232 meshed with the third gear 13231, the fourth gear 13232 transmits the torque to the fifth gear 13241a via the universal joint 1326, the fifth gear 13241a transmits the torque to the sixth gear 13242a meshed with the fifth gear 13241a, and further, the sixth gear 13242a transmits the torque to the first bevel gear 13251 via the gear rod 1327, finally, the first bevel gear 13251 transmits the torque to the second bevel gear 13252 meshed with the first bevel gear 13251, and the second bevel gear 13252 drives the second barrel body 1212 to rotate. Because the second barrel body 1212 may drive the first lens to move in a rotation process, rotational movement of the adjustment rod 131 in the second state may be finally converted into movement of the first lens in the second direction. In other words, when the adjustment rod 131 is in the second state, the adjustment rod 131 may receive a rotation operation of the user, so that the first adjustment mechanism 130a implements a nearsightedness or farsightedness adjustment function.

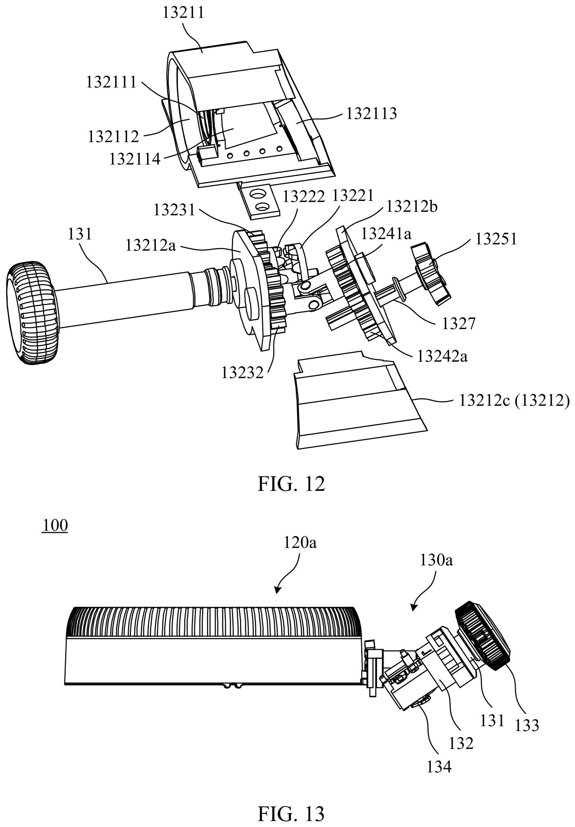

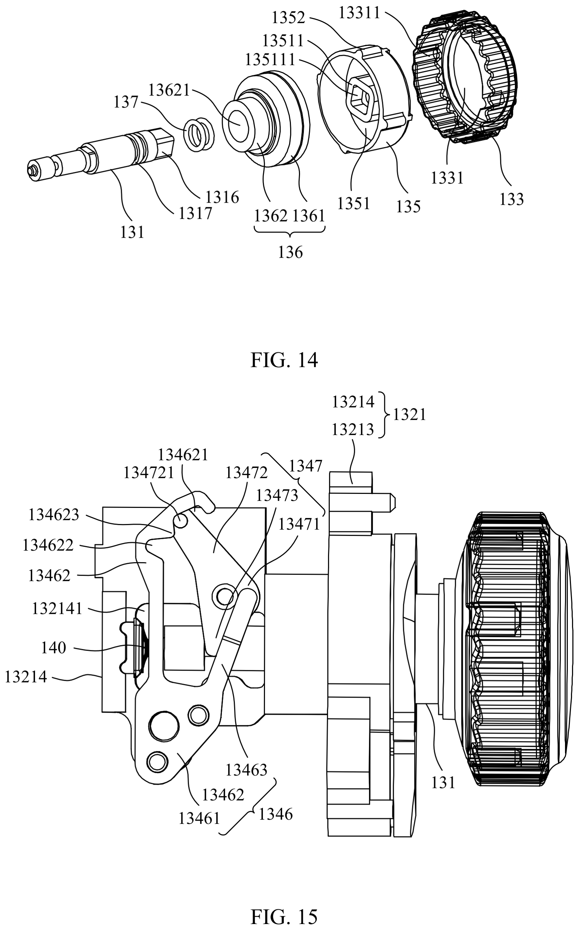

FIG. 12 is a partial exploded diagram of a transmission assembly 132 according to an embodiment of this application. In this embodiment of this application, the box 1321 may include a body 13211 and a gear cover 13212. The gear cover 13212 and the body 13211 are connected and enclosed to form the inside of the box 1321. To reduce difficulty in assembling all the stages of gear pairs in the box 1321, there may be a plurality of gear covers 13212. The box shown in FIG. 14 includes three gear covers 13212. The three gear covers 13212 are respectively defined as a first gear cover 13212a, a second gear cover 13212b, and a third gear cover 13212c. The first gear cover 13212a covers a side that is of the body 13211 and that faces the first end of the adjustment rod 131, the second gear cover 13212b covers a side that is of the body 13211 and that faces the second end of the adjustment rod 131, the third gear cover 13212c is disposed adjacent to the first gear cover 13212a and the second gear cover 13212b, and the third gear cover 13212c is separately fastened to the body 13211, the first gear cover 13212a, and the second gear cover 13212b.

In this embodiment, the body 13211 includes a first accommodating cavity 132111, and the first gear 13221 and the second gear 13222 may be assembled in the first accommodating cavity 132111. The first gear cover 13212a and a side that is of the body 13211 and that faces the first gear cover 13212a may jointly enclose a second accommodating cavity 132112, the second accommodating cavity 132112 communicates with the first accommodating cavity 132111, and the third gear 13231 and the fourth gear 13232 may be assembled in the second accommodating cavity 132112. The second gear cover 13212b and a side that is of the body 13211 and that faces the second gear cover 13212b may jointly enclose a third accommodating cavity 132113, and the fifth gear 13241a and the sixth gear 13242a may be assembled in the third accommodating cavity 132113. The third gear cover 13212c and a side that is of the body 13211 and that faces the third gear cover 13212c may jointly enclose a fourth accommodating cavity 132114, the fourth accommodating cavity 132114 may separately communicate with the first accommodating cavity 132111 and the second accommodating cavity 132112, and the universal joint 1326 may be assembled in the fourth accommodating cavity 132114.

With reference to FIG. 7, FIG. 8, and FIG. 12, the following describes an assembling process of a display module provided in an embodiment of this application. During assembly, the second gear 13222 and the third gear 13231 are first sleeved on the second rod body 1312, the second rod body 1312, the third gear 13231, the fourth gear 13232, the universal joint 1326, the fifth gear 13241a, and the sixth gear 13242a are assembled in the box 1321, and then the box 1321 is fastened to the cover plate. The first lens 1221 and the second lens 1222 are mounted on the first barrel body 1211, and then the second barrel body 1212 is sleeved on an outside of the first barrel body 1211. The first bevel gear 13251 and the second bevel gear 13252 are assembled on the second barrel body 1212, and the gear rod 1327 of the first bevel gear 13251 extends into the box 1321 to be assembled with the sixth gear 13242a, and then, the lens barrel 121 is assembled on the cover plate 112 via the first guide rail 1121. The cover plate 112 is mounted in the frame 111. Finally, one end of the first rod body 1311 with the adjustment button 133 penetrates the frame 111, and is fastened to the second rod body 1312 in the frame 111.

FIG. 13 is a diagram of a structure of another first adjustment mechanism 130a according to an embodiment of this application. In this embodiment of this application, the first adjustment mechanism 130a may also include an adjustment rod 131, a transmission assembly 132, and a limiting assembly 134. Functions of the adjustment rod 131, the transmission assembly 132, and the limiting assembly 134 and a manner of disposing the adjustment rod 131, the transmission assembly 132, and the limiting assembly 134 in the display module 100 are similar to those in the foregoing embodiment, and there are slight differences in structure. The following describes a specific implementation of the first adjustment mechanism 130a with reference to FIG. 13 to FIG. 21.

FIG. 14 is an exploded diagram of a partial structure of the first adjustment mechanism shown in FIG. 13. In this embodiment, at the first end of the adjustment rod 131, in addition to the adjustment button 133, the first adjustment mechanism 130a may further include a follower 135 and a mounting base 136. A first mounting groove 1331 is disposed on a side of the adjustment button 133, and the follower 135 may be mounted in the first mounting groove 1331. Similarly, a second mounting groove 1351 is disposed on a side that is of the follower 135 and that faces away from the adjustment button 133, and the mounting base 136 is at least partially mounted in the second mounting groove 1351. The first end of the adjustment rod 131 may penetrate the mounting base 136 and be fastened to the follower 135.

In some implementations, an inner wall of the first mounting groove 1331 has one or more slots 13311. Correspondingly, an outer wall of the follower 135 has protruding blocks 1352 in a one-to-one correspondence with the slots 13311. When the follower 135 is mounted in the first mounting groove 1331, each protruding block 1352 may be clamped in a corresponding slot 13311, so that the follower 135 is fastened to the adjustment button 133 through cooperation between the protruding blocks 1352 and the slots 13311. Certainly, in some other implementations, to simplify an assembling process of the first adjustment mechanism 130a, the follower 135 and the adjustment button 133 may alternatively be an integrated structure.

In some implementations, a protruding portion 13511 may be disposed on a bottom wall of the second mounting groove 1351, and the protruding portion 13511 is provided with a special-shaped groove 135111. For example, a cross-sectional shape of the special-shaped groove 135111 may be any shape other than a circle, for example, a rhombus, a square, or a sawtooth.

In some implementations, the first end of the adjustment rod 131 may have a special-shaped plug 1316, and a cross-sectional shape of the special-shaped plug 1316 is consistent with the cross-sectional shape of the special-shaped groove 135111. When the foregoing components are assembled, the special-shaped plug 1316 of the adjustment rod 131 may be inserted into the special-shaped groove 135111 of the protruding portion 13511 after the special-shaped plug 1316 penetrates the mounting base 136. Relative movement of the adjustment rod 131 and the follower 135 may be limited through cooperation between the special-shaped groove 135111 and the special-shaped plug 1316, so that when the adjustment button 133 is adjusted, the adjustment rod 131 can be synchronously driven to move via the follower 135. Certainly, in some other implementations, the adjustment rod 131 may alternatively be connected to the follower through threaded connection, bonding, or the like.

In some implementations, in the axial direction of the adjustment rod 131, the mounting base 136 may be a stepped structure. For example, the mounting base 136 may include a first base body 1361 and a second base body 1362, and a diameter of the first base body 1361 is greater than a diameter of the second base body 1362. When the mounting base 136 is assembled with the follower 135, the first base body 1361 of the mounting base 136 may be located in the second mounting groove 1351 of the follower 135, and the first base body 1361 of the mounting base 136 may be in a clearance fit with the second mounting groove 1351 of the follower 135, so that the follower 135 can rotate or move relative to the mounting base 136. In addition, the first base body 1361 may be provided with an avoidance groove, and the avoidance groove may be configured to avoid the protruding portion 13511 in the second mounting groove 1351. The second base body 1362 may be located outside the second mounting groove 1351 of the follower 135, the second base body 1362 may be provided with a mounting hole 13621, the mounting hole 13621 communicates with the avoidance groove, the first end of the adjustment rod 131 may be connected to the protruding portion 13511 after penetrating the mounting hole 13621, and the adjustment rod 131 can rotate relative to the mounting base 136.

When the adjustment rod 131 is mounted on the display module 100, similar to the foregoing embodiment, the housing of the display module 100 may be provided with a first through hole, and the second base body 1362 of the mounting base 136 may be fastened in the first through hole. In this case, the first base body 1361 of the mounting base 136, the follower 135 sleeved on the first base body 1361, and the adjustment button 133 sleeved on the follower 135 are all located outside the housing. When receiving a push-pull operation of the user, the adjustment button 133 may drive, via the follower 135, the adjustment rod 131 to move relative to the mounting base 136, so that the adjustment rod 131 can be switched between the first state and the second state; and when receiving a rotation operation of the user, the adjustment button 133 may drive, via the follower 135, the adjustment rod 131 to rotate relative to the mounting base 136.

In addition, in some embodiments, the first adjustment mechanism 130a may further include a sealing ring 1317, a sealing groove 1317 may be disposed on a peripheral side of a portion that is of the adjustment rod 131 and that corresponds to the mounting hole 13621 of the second base body 1362, and the sealing ring 137 may be partially accommodated in the sealing groove 1317. In addition, in a radial direction of the adjustment rod 131, the sealing ring 1317 may be squeezed between a groove bottom of the sealing groove 1317 and an inner wall of the mounting hole 13621. In this way, sealing performance of the housing at the mounting hole 13621 can be improved, damping of the adjustment rod 131 in a moving or rotating process may also be increased, thereby helping improve user experience.

FIG. 15 is a diagram of a partial structure of the first adjustment mechanism 130a in FIG. 13. In this embodiment of this application, the limiting assembly 134 may include a spring plate 1346 and a rotating member 1347. Both the spring plate 1346 and the rotating member 1347 are mounted on a mechanical part inside the display module, for example, in the embodiment shown in FIG. 15. The spring plate 1346 and the rotating member 1347 may be mounted on the box 1321 of the transmission assembly 132, to use the existing mechanical part in the display module as a carrier of the spring plate 1346 and the rotating member 1347, thereby helping simplify a structure of the display module. Certainly, in some other implementations, an independent mechanical part may alternatively be disposed in the display module to carry the limiting assembly 134.

In this embodiment of this application, the box 1321 may include a first portion 13213 and a second portion 13214. The first portion 13213 and the second portion 13214 are sequentially disposed away from the adjustment button 133 in the axial direction of the adjustment rod 131. During specific design, the second portion 13214 has a through groove 132141, and the through groove 132141 penetrates the second portion 13214 in the radial direction of the adjustment rod 131. In this case, the second portion 13214 is equivalent to a hollow frame structure. The second end of the adjustment rod 131 may extend into the second portion 13214, and the second end of the adjustment rod 131 is exposed within the through groove 132141 of the second portion 13214.

In some embodiments, the spring plate 1346 includes a fastening portion 13461 and a first elastic stub 13462. The fastening portion 13461 is fastened to the second portion 13214 of the box 1321, for example, may be but is not limited to being fastened via a fastener. The first elastic stub 13462 is fastened to the fastening portion 13461, a first accommodating groove 134621 and a second accommodating groove 134622 are disposed on one side of the first elastic stub 13462, the first accommodating groove 134621 and the second accommodating groove 134622 are spaced from each other via a limiting protrusion 134623, and a width of the first accommodating groove 134621 is greater than a width of the second accommodating groove 134622. In some implementations, the spring plate 1346 may further include a second elastic stub 13463, the second elastic stub 13463 is fastened to the fastening portion 13461, and an end portion of the second elastic stub 13463 and an end portion of the first elastic stub 13462 are spaced from each other.

The rotating member 1347 may be disposed on a side that is of the fastening portion 13461 and that faces the box 1321. The rotating member 1347 includes a rotating portion 13471 and a first rotating arm 13472 and a second rotating arm 13473 that are connected to the rotating portion 13471, the rotating portion 13471 is rotatably connected to the second portion 13214 of the box 1321, the first rotating arm 13472 and the second rotating arm 13473 are disposed at a specific included angle, and the included angle is greater than 0 degrees and less than 180 degrees. An end portion of the first rotating arm 13472 may be disposed between the first elastic stub 13462 and an outer wall of the second portion 13214, a first limiting pole 134721 may be disposed on a surface that is of the first rotating arm 13472 and that faces the first elastic stub 13462, and the first limiting pole 134721 may be accommodated in the first accommodating groove 134621 or the second accommodating groove 134622. In addition, in an example in which the spring plate 1346 includes the second elastic stub 13463, the second rotating arm 13473 may be partially crimped between the second elastic stub 13463 and the outer wall of the second portion 13214 of the box 1321.

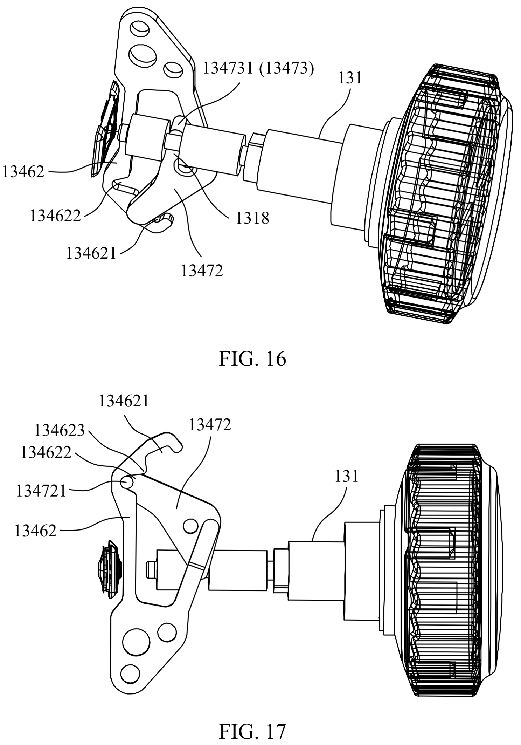

Refer to FIG. 16 and FIG. 17 together. FIG. 16 is a diagram of a partial structure of the limiting assembly 134 of the first adjustment mechanism 130a shown in FIG. 13 in a state. FIG. 17 is a diagram of a partial structure of the limiting assembly 134 of the first adjustment mechanism 130a shown in FIG. 13 in another state. To clearly show a relative position relationship between the limiting assembly 134 and the adjustment rod 131, the box is omitted in both FIG. 16 and FIG. 17. In this embodiment of this application, a second limiting pole 134731 may be disposed at an end portion of the second rotating arm 13473, and the second limiting pole 134731 may be located on a surface that is of the second rotating arm 13473 and that faces the box. The peripheral side of the adjustment rod 131 includes a clamping groove 1318, and the second limiting pole 134731 of the second rotating arm 13473 may be clamped in the clamping groove 1318. For example, the clamping groove 1318 may be an annular groove disposed in a circumferential direction of the adjustment rod 131.

When the first limiting pole 134721 of the first rotating arm 13472 is limited in the first accommodating groove 134621 of the first elastic stub 13462, the adjustment rod 131 is in the first state. In this case, if the adjustment rod 131 is subject to a pulling force and moves towards the outside of the housing, the adjustment rod 131 drives, via the second limiting pole 134731, the rotating member 1347 to rotate clockwise, a position of the first limiting pole 134721 of the first rotating arm 13472 also changes accordingly, and the first limiting pole 134721 moves from the first accommodating groove 134621 to the second accommodating groove 134622 by squeezing the first elastic stub 13462 to generate deformation, so that the adjustment rod 131 is adjusted to the second state. When the first limiting pole 134721 of the first rotating arm 13472 is limited in the second accommodating groove 134622 of the first elastic stub 13462, the adjustment rod 131 is in the second state. In this case, if the adjustment rod 131 is subject to a pressing force and moves toward the inside of the housing, the adjustment rod 131 drives, via the second limiting pole 134731, the rotating member 1347 to rotate counterclockwise, a position of the first limiting pole 134721 of the first rotating arm 13472 also changes accordingly, and the first limiting pole 134721 moves from the second accommodating groove 134622 to the first accommodating groove 134621 by squeezing the first elastic stub 13462 to generate deformation, so that the adjustment rod 131 is adjusted to the first state.

In addition, to reduce a risk that the first limiting pole 134721 of the first rotating arm 13472 is stuck in the first accommodating groove 134621 or the second accommodating groove 134622, the adjustment rod 131 can smoothly switch between the first state and the second state, and the limiting protrusion 134623 between the first accommodating groove 134621 and the second accommodating groove 134622 may have an arc-shaped surface. In this way, the first limiting pole 134721 can smoothly move between the first accommodating groove 134621 and the second accommodating groove 134622 along the arc-shaped surface of the limiting protrusion 134623.

Refer to FIG. 15 again. In this embodiment of this application, all electrical components in the display module, such as a button 140 and a sensor (not shown in the figure), may be carried in the second portion 13214 of the box 1321. In addition, a correspondence between the button 140 and the adjustment rod 131 and a correspondence between the sensor and the adjustment rod 131 may be designed with reference to the foregoing embodiment. To be specific, the button 140 is disposed facing the second end of the adjustment rod 131, and a surface that is of the sensor and that is provided with the light source and the photosensitive area are disposed faces the outer wall of the adjustment rod 131, so that the adjustment rod 131 implements, in the first state, a function similar to that in the foregoing embodiment.

In addition, in this embodiment, a width of the first accommodating groove 134621 of the first elastic stub 13462 is greater than a diameter of the first limiting pole 134721 of the first rotating arm 13472. In this way, when the adjustment rod 131 is in the first state, the first limiting pole 134721 may move slightly in the first accommodating groove 134621, so that the adjustment rod 131 is allowed to generate slight displacement under a pressing action, and the adjustment rod 131 can trigger the button 140 when being pressed in the first state, to input a button signal.

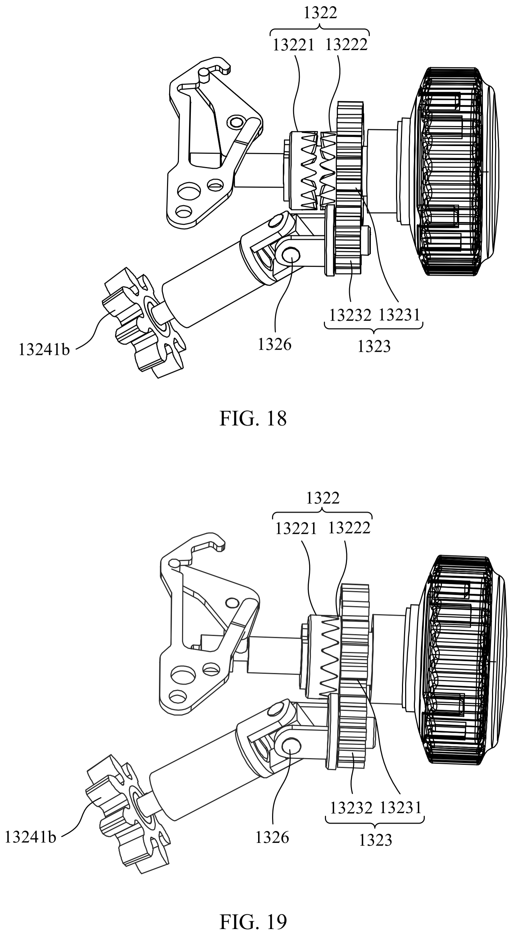

Refer to FIG. 18 and FIG. 19 together. FIG. 18 is a diagram of a partial structure of the transmission assembly 132 of the first adjustment mechanism 130a shown in FIG. 13 in a state. FIG. 19 is a diagram of a partial structure of the transmission assembly 132 of the first adjustment mechanism 130a shown in FIG. 13 in another state. In this embodiment, the transmission assembly 132 may also transmit torque via a plurality of stages of gear pairs. In a torque transmission direction, a first stage of gear pair in the plurality of stages of gear pairs may be configured to: be in transmission connection to the adjustment rod 131 in a meshed state, and be disconnected from the adjustment rod 131 in a non-meshed state, the last stage of gear pair in the plurality of stages of gear pairs may be configured to be in transmission connection to the second barrel body of the lens barrel. In this way, the torque of the adjustment rod 131 can be sequentially transmitted to the second barrel body through the stage gear pairs, to drive the second barrel body to rotate.

In a specific implementation, the transmission assembly 134 may include three stages of gear pairs. In a power transmission direction, the three stages of gear pairs are a first stage of gear pair 1322, a second stage of gear pair 1323, and a third stage of gear pair 1324. The first stage of gear pair 1322 and the second stage of gear pair 1323 may be mounted in the box 1321, the third stage of gear pair 1324 may be located outside the box 1321, and the third stage of gear pair 1324 is the last stage of gear pair of the transmission assembly 132. The following separately describes all stages of gear pairs.

The first stage of gear pair 1322 includes a first gear 13221 and a second gear 13222, both the first gear 13221 and the second gear 13222 may be sleeved on the adjustment rod 131, and the second gear 13222 is located on a side that is of the first gear 13221 and that is close to the first end of the adjustment rod 131. The first gear 13221 is fastened to the adjustment rod 131, the second gear 13222 is in clearance fit with the adjustment rod 131, and the second gear 13222 may be rotatably assembled in the box. The first gear 13221 and the second gear 13222 may be end-face gears, a gear tooth of the first gear 13221 is disposed on an end face of a side that is of the first gear 13221 and that faces the second gear 13222, a gear tooth of the second gear 13222 is disposed on an end face of a side that is of the second gear 13222 and that faces the first gear 13221. When the adjustment rod 131 is in the first state, there is a specific spacing between the gear tooth of the first gear 13221 and the gear tooth of the second gear 13222, and the first gear 13221 is not meshed with the second gear 13222. When the adjustment rod 131 is pulled to the second state, the first gear 13221 moves in a direction close to the second gear 13222 with the adjustment rod 131, and the first gear 13221 is meshed with the second gear 13222. In addition, to ensure that the first gear 13221 is smoothly connected to the second gear 13222, an addendum of the gear tooth of the first gear 13221 may use an arc surface for transition, an addendum of the gear tooth of the second gear 13222 may also use an arc surface for transition.

The second stage of gear pair 1323 includes a third gear 13231 and a fourth gear 13232. The third gear 13231 may be fastened to the second gear 13222, the third gear 13231 may be sleeved on the adjustment rod, the third gear 13231 is located on a side that is of the second gear 13222 and that is away from the first gear, and the third gear 13231 may also be in clearance fit with the adjustment rod 131. For example, the third gear 13231 and the second gear 13222 may be an integrated structure. The fourth gear 13232 may be located on a side of a peripheral side of the third gear 13231, and the fourth gear 13232 is rotatably assembled in the box. The third gear 13231 and the fourth gear 13232 each may be a cylindrical gear, and the third gear 13231 and the fourth gear 13232 are meshed with each other through gear teeth disposed on respective peripheral sides.

The third stage of gear pair 1324 is a bevel gear pair, and the third stage of gear pair 1324 includes a first bevel gear 13241b and a second bevel gear (not shown in the figure). The first bevel gear 13241b and the second bevel gear are located outside the box. The first bevel gear 13241b is assembled on a gear rod 1327, the gear rod 1327 may be in transmission connection to the fourth gear 13232 via the universal joint 1326, the second bevel gear is disposed on a peripheral side of the second barrel body, and the second bevel gear is fastened to the second barrel body. The first bevel gear 13241b and the second bevel gear may be bevel gears, and gear teeth of the first bevel gear 13241b may drive, by rolling gear teeth of the second bevel gear, the second bevel gear to rotate.

In this embodiment, the universal joint 1326 may include a first universal joint fork 13261, a second universal joint fork 13262, and a cross shaft 13263. The first universal joint fork 13261 is fastened to one end face of the fourth gear 13232, the second universal joint fork 13262 is slidably connected to the gear rod 1327 of the first bevel gear 13241b, two connecting shafts of the cross shaft 13263 are respectively assembled in the first universal joint fork 13261 and the second universal joint fork 13262. For example, one end that is of the second universal joint fork 13262 and that is away from the cross shaft has a sleeve 132621, and the gear rod 1327 may be slidably assembled in the sleeve 132621.

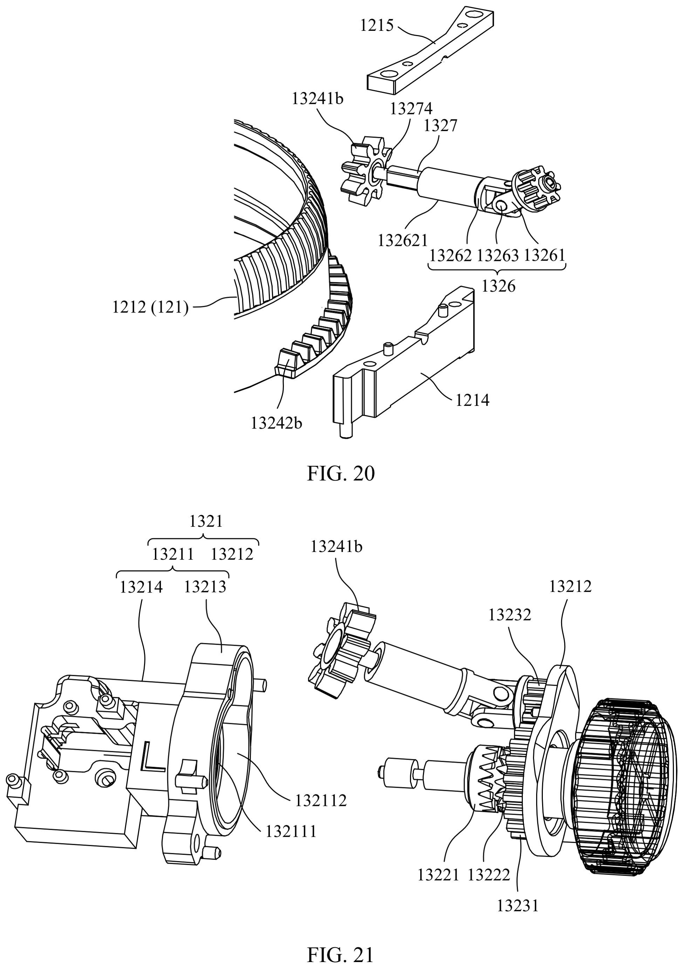

Refer to FIG. 19 and FIG. 20 together. FIG. 20 is an exploded diagram of a partial structure of the lens barrel and the transmission assembly shown in FIG. 13. In this embodiment, an inner hole of the sleeve 132621 of the second universal joint fork 13262 may be a special-shaped hole, and correspondingly, a cross section of the gear rod 1327 may be a special-shaped cross section matched with the special-shaped hole. The gear rod 1327 cooperates with the sleeve 132621, so that the fourth gear 13232 can drive the gear rod 1327 to rotate, and further drive the first bevel gear 13241b to rotate, torque transmission between the fourth gear 13232 and the first bevel gear 13241b is implemented, a degree of freedom of the gear rod 1327 and the first bevel gear 13241b in the axial direction is also released, and the gear rod 1327 and the first bevel gear 13241b can move in the axial direction of the gear rod 1327.

Certainly, in some other embodiments, the gear rod 1327 may alternatively be connected to the sleeve 132621 of the second universal joint fork 13262 through a spline or the like. Details are not described herein.

An annular groove 13274 may be further disposed on a side that is of the gear rod 1327 and that is close to the first bevel gear 13241b. The lens barrel 121 may include a first limiting wall 1214. The first limiting wall 1214 may be disposed on a peripheral side of the lens barrel 121, and the first limiting wall 1214 the lens barrel 121 are spaced from each other. The first bevel gear 13241b may be located between the first limiting wall 1214 and an outer wall of the second barrel body 1212, so that the first bevel gear 13241b is meshed with the second bevel gear 13242b fastened to the second barrel body 1212. The first limiting wall 1214 may be partially clamped in the annular groove 13274, and two sides of the first limiting wall 1214 respectively abut against groove walls on two sides of the annular groove 13274. Relative movement of the gear rod 1327 and the lens barrel 121 is limited via the first limiting wall 1214.

In some embodiments, the lens barrel 121 may further include a second limiting wall 1215. The second limiting wall 1215 may be disposed on a side that is of the first limiting wall 1214 and that faces the gear rod 1327, the second limiting wall 1215 is also partially clamped in the annular groove 13274, and two sides of the second limiting wall 1215 respectively abut against groove walls on two sides of the annular groove 13274, so that the second limiting wall 1215 can also implement a function of limiting the gear rod 1327. For example, the first limiting wall 1214 and the second limiting wall 1215 may be enclosed to form a hole-shaped structure, and a portion of a shaft section that is of the gear rod 1327 and that corresponds to the annular groove 13274 is located in the hole-shaped structure.

When the user moves the first display assembly to adjust a pupillary distance, based on cooperation between the first limiting wall 1214, the second limiting wall 1215, and the gear rod 1327, the gear rod 1327 and the first bevel gear 13241b may move synchronously with the first display assembly. In this case, the first bevel gear 13241b and the second bevel gear 13242b may always be in a meshed state, and because the gear rod 1327 is slidably connected to the second universal joint fork 13262, the fourth gear 13232 can be also always in transmission connection to the first bevel gear 13241b via the universal joint 1326, thereby effectively improving structural stability of the transmission assembly.

With reference to FIG. 18 to FIG. 20, it can be learned from the foregoing descriptions that, in this embodiment, when the adjustment rod is adjusted to the second state, a power transmission path of the transmission assembly is as follows: The first gear 13221 receives the torque of the adjustment rod 131 and transmits the torque to the second gear 13222, the second gear 13222 transmits the torque to the third gear 13231, then, the third gear 13231 transmits the torque to the fourth gear 13232 meshed with the third gear 13231, the fourth gear 13232 transmits the torque to the first bevel gear 13241b via the universal joint 1326, the first bevel gear 13241b transmits the torque to the second bevel gear 13242b meshed with the first bevel gear 13241b, and the second bevel gear 13242b drives the second barrel body 1212 to rotate. Because the second barrel body 1212 may drive the first lens to move in a rotation process, rotational movement of the adjustment rod 131 in the second state may be finally converted into movement of the first lens in the second direction. In other words, when the adjustment rod 131 is in the second state, the adjustment rod 131 may receive a rotation operation of the user, so that the first adjustment mechanism 130a implements a nearsightedness or farsightedness adjustment function.

FIG. 21 is a partial exploded diagram of the transmission assembly shown in FIG. 13. In this embodiment of this application, the box 1321 may include a body 13211 and a gear cover 13212. The body 13211 and the gear cover 13212 are connected and enclosed to form the inside of the box 1321. Both the first portion 13213 and the second portion 13214 of the box 1321 may belong to a portion of the body 13211, and the gear cover may cover a side that is of the first portion and that is away from the first portion. The body 13211 includes a first accommodating cavity 132111, and the first gear 13221 and the second gear 13222 may be assembled in the first accommodating cavity 132111. The first gear cover 13212a and a side that is of the body 13211 and that faces the first gear cover 13212a may jointly enclose a second accommodating cavity 132112, the second accommodating cavity 132112 communicates with the first accommodating cavity 132111, and the third gear 13231 and the fourth gear 13232 may be assembled in the second accommodating cavity 132112.

As described above, the head-mounted display device may further include a processor configured to control running of the entire device. For example, in the foregoing embodiments, the processor may be configured to: when it is determined that the head-mounted display device is in a state in which a handle is not connected, receive a signal sent by an electrical component in the head-mounted display device when the electrical component is triggered by the adjustment rod of the adjustment mechanism; and generate a corresponding control instruction based on a type of the signal. The control instruction is used to control display content of a display interface of the head-mounted display device. Based on this manner, a user may not interact with the head-mounted display device by using a handle or a gesture, but directly control the head-mounted display device via the adjustment mechanism. In this way, even in a scenario in which there is no handle or there is low light, the user can still use the head-mounted display device. Therefore, an application scenario of the head-mounted display device is effectively extended, and interactivity of the head-mounted display device in different scenarios is improved.

In an implementation, the processor may determine, based on a Bluetooth connection status between the head-mounted display device and the handle, whether the handle is not connected. In another implementation, the processor may determine, by determining whether a position and a posture uploaded by the handle remain unchanged, whether the user is currently using the handle. If the position and the posture of the handle remain unchanged for a long time, it may be considered that the head-mounted display device is in a state in which the handle is not connected.

In this embodiment of this application, the type of the signal may include a pressing signal or a rotation signal. The pressing signal may be generated when the button is pressed by the adjustment rod, and the rotation signal may be obtained by the sensor by detecting a rotation status of the adjustment rod.

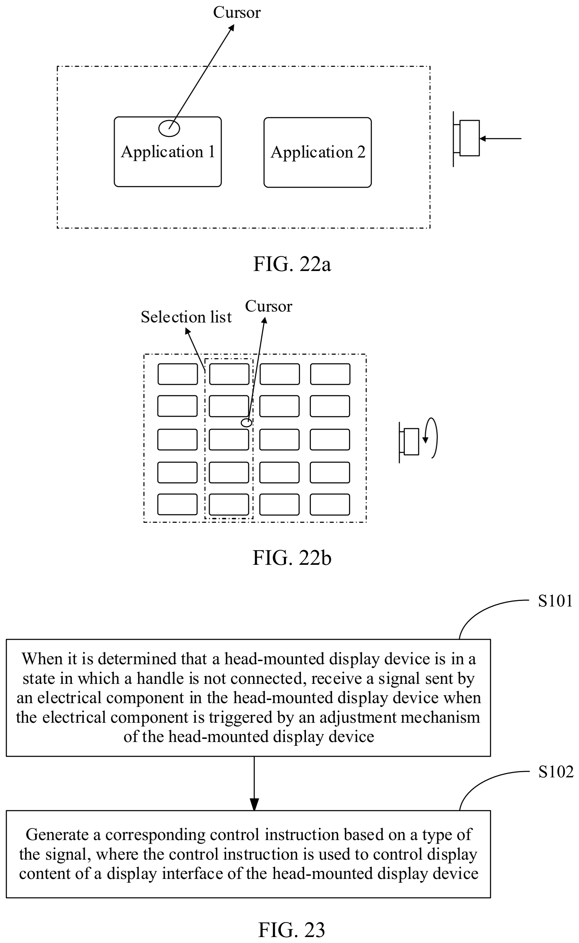

FIG. 22a shows a display interface of a head-mounted display device according to an embodiment of this application. In this embodiment, after adjusting the adjustment rod to the first state, the user may trigger the button by pressing the adjustment rod. The processor may generate a first control instruction based on a pressing signal generated when a button is triggered. The first control instruction may be used to control a cursor in the display interface to click an interactive control in the display interface, for example, an application 1 in FIG. 22a.

FIG. 22b shows another display interface of a head-mounted display device according to an embodiment of this application. In this embodiment, after adjusting the adjustment rod to the first state, the user may trigger the sensor by rotating the adjustment rod. The processor may generate a second control instruction based on the rotation signal generated when the sensor is triggered, where the second control instruction may be used to control sliding of the display interface.

In addition, in this embodiment, the processor is further configured to: before receiving the signal sent by the electrical component when the electrical component is triggered by the adjustment rod, control, based on a head action or an eye action of a user, a cursor in the display interface to point to the interactive control in the display interface. For example, in the embodiment shown in FIG. 22a, the processor may control, based on the head movement or the eye movement of the user, the cursor in the display interface to point to the application 1, so that after the pressing signal is received, the processor controls, based on the generated first control instruction, the cursor to click the application 1 to access the application. Alternatively, in the embodiment shown in FIG. 22b, the processor may control, based on the head movement or the eye movement of the user, the cursor in the display interface to point to a selection list, so that after the rotation signal is received, the selection list slides according to the generated second control instruction.

In an implementation, if the processor controls movement of the cursor based on the head action of the user, the processor may control the head-mounted display device to vertically emit the cursor from a center of a display to the display interface, to interact with the display interface. If the processor controls movement of the cursor based on the eye movement of the user, the processor may obtain eyeball position information of the user, where the cursor indicates a position that the user looks at.

Based on a same concept, an embodiment of this application further provides a display method of a head-mounted display device. Referring to FIG. 23, the display method includes the following steps.

Step S101: When it is determined that the head-mounted display device is in a state in which a handle is not connected, receive a signal sent by an electrical component in the head-mounted display device when the electrical component is triggered by an adjustment mechanism of the head-mounted display device.

Step S102: Generate a corresponding control instruction based on a type of the signal, where the control instruction is used to control display content of a display interface of the head-mounted display device.

According to the display method provided in this embodiment of this application, a user may not interact with the head-mounted display device by using a handle or a gesture, but directly control the head-mounted display device via the adjustment mechanism. In this way, even in a scenario in which there is no handle or there is low light, the user can still use the head-mounted display device. Therefore, an application scenario of the head-mounted display device is effectively extended, and interactivity of the head-mounted display device in different scenarios is improved.

In some embodiments, the type of the signal may include a pressing signal. In this case, the display method may specifically include:
generating a first control instruction based on the pressing signal, where the first control instruction may be used to control a cursor in the display interface to click an interactive control in the display interface.

In some embodiments, the type of the signal may further include a rotation signal. In this case, the display method may specifically include:
generating a second control instruction based on the rotation signal generated when a sensor is triggered, where the second control instruction may be used to control sliding of the display interface.

In some implementation solutions, the display method may further include:
before receiving the signal sent by the electrical component when the electrical component is triggered by the adjustment rod, controlling, based on a head action or an eye action of a user, a cursor in the display interface to point to an interactive control in the display interface. For example, movement of the cursor is controlled based on the head action of the user, a position at which the cursor is vertically emitted from the center of the display of the head-mounted display device to the display interface may be determined, and the position is a position of the cursor; and the movement of the cursor is controlled based on the eye movement of the user, a position where the user is looking may be determined based on eyeball position information of the user, and the position is the position of the cursor.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An adjustment mechanism (130) of a head-mounted display device, wherein the adjustment mechanism (130) is mounted on a housing (110) of the head-mounted display device, the adjustment mechanism (130) comprises an adjustment rod (131) and a transmission assembly (132), and the adjustment rod (131) has a first state and a second state, wherein
the adjustment rod (131) is configured to: in the first state, be disconnected from the transmission assembly (132), and trigger, when a pressing operation or a rotation operation is received, an electrical component in the head-mounted display device to send a signal; and the adjustment rod (131) is configured to: in the second state, be in transmission connection to the transmission assembly (132), and transmit power to the transmission assembly (132) when a rotation operation is received; and
the transmission assembly (132) is configured to receive the power transmitted by the adjustment rod (131), and drive a display assembly (120) of the head-mounted display device to perform nearsightedness or farsightedness adjustment.

2. The adjustment mechanism (130) according to claim 1, wherein the adjustment mechanism (130) further comprises a limiting assembly (134), the limiting assembly (134) is provided with an elastic arm (1341), and an end portion of the elastic arm (1341) is provided with a protrusion (13411) disposed toward a peripheral side of the adjustment rod (131); and
a first limiting groove (1313) and a second limiting groove (1314) are disposed on the peripheral side of the adjustment rod (131), the first limiting groove (1313) and the second limiting groove (1314) are spaced from each other in an axial direction of the adjustment rod (131), the adjustment rod (131) is capable of sliding relative to the limiting assembly (134), the adjustment rod (131) is in the first state when the protrusion (13411) of the elastic arm (1341) is limited in the first limiting groove (1313), and the adjustment rod (131) is in the second state when the protrusion (13411) of the elastic arm (1341) is limited in the second limiting groove (1314).

3. The adjustment mechanism (130) according to claim 2, wherein the limiting assembly (134) comprises a fastening bracket (1342) and a limiting cover (1343), the fastening bracket (1342) and the limiting cover (1343) are fastened and enclosed to form a limiting hole (1344), and the adjustment rod (131) is slidably disposed in the limiting hole (1344); and
the elastic arm (1341) is fastened to the fastening bracket (1342) or the limiting cover (1343).

4. The adjustment mechanism (130) according to claim 2 or 3, wherein the first limiting groove (1313) and the second limiting groove (1314) are spaced from each other via a limiting step (1315), and end faces on two sides of the limiting step (1315) in the axial direction of the adjustment rod (131) each have a chamfer structure.

5. The adjustment mechanism (130) according to any one of claims 2 to 4, wherein a length of the first limiting groove (1313) in the axial direction of the adjustment rod (131) is greater than a length of the protrusion (13411) of the elastic arm (1341) in the axial direction of the adjustment rod (131).

6. The adjustment mechanism (130) according to claim 1, wherein the adjustment mechanism (130) further comprises a limiting assembly (134), the limiting assembly (134) comprises a spring plate (1346) and a rotating member (1347), the spring plate (1346) is fastened to a mechanical part in the housing (110), the spring plate (1346) has a first accommodating groove (134621) and a second accommodating groove (134622) that are spaced from each other, the rotating member (1347) comprises a rotating portion (13471) and a first rotating arm (13472) and a second rotating arm (13473) that are connected to the rotating portion (13471), the rotating portion (13471) is rotatably disposed on the mechanical part in the housing (110), the first rotating arm (13472) is provided with a first limiting pole (134721), the first limiting pole (134721) is switched between the first accommodating groove (134621) and the second accommodating groove (134622) as the rotating member (1347) rotates, and the second rotating arm (13473) is provided with a second limiting pole (134731); and
a peripheral side of the adjustment rod (131) is provided with a clamping groove (1318), the clamping groove (1318) is configured to clamp the second limiting pole (134731), the adjustment rod (131) drives, via the second limiting pole (134731), the rotating member (1347) to rotate when the adjustment rod (131) slides, the adjustment rod (131) is in the first state when the first limiting pole (134721) is limited in the first accommodating groove (134621), and the adjustment rod (131) is in the second state when the first limiting pole (134721) is limited in the second accommodating groove (134622).

7. The adjustment mechanism (130) according to claim 6, wherein the first accommodating groove (134621) and the second accommodating groove (134622) are spaced from each other via a limiting protrusion (134623), and the limiting protrusion (134623) has an arc-shaped surface.

8. The adjustment mechanism (130) according to claim 6 or 7, wherein a width of the first accommodating groove (134621) is greater than a diameter of the first limiting pole (134721).

9. The adjustment mechanism (130) according to any one of claims 1 to 8, wherein the transmission assembly (132) comprises a plurality of stages of gear pairs that are sequentially in transmission connection and a box (1321), and at least one stage of gear pair is mounted in the box (1321); in a transmission direction of the power, a first stage of gear pair (1322) in the plurality of stages of gear pairs is configured to: be in transmission connection to the adjustment rod (131) in a meshed state and disconnected from the adjustment rod (131) in a non-meshed state; and a last stage of gear pair in the plurality of stages of gear pairs is configured to be in transmission connection to the display assembly (120) of the head-mounted display device.

10. The adjustment mechanism (130) according to claim 9, wherein the first stage of gear pair (1322) comprises a first gear (13221) and a second gear (13222), the first gear (13221) and the second gear (13222) are separately sleeved on the adjustment rod (131), the first gear (13221) is fastened to the adjustment rod (131), the second gear (13222) is in a clearance fit with the adjustment rod (131), the second gear (13222) is rotatably assembled in the box (1321), and the first gear (13221) and the second gear (13222) are end-surface gears; and
when the adjustment rod (131) is in the first state, the first gear (13221) and the second gear (13222) are spaced from each other, and when the adjustment rod (131) is in the second state, the first gear (13221) is meshed with the second gear (13222).

11. The adjustment mechanism (130) according to claim 9 or 10, wherein the last stage of gear pair is located outside the box (1321), the last stage of gear pair comprises a first bevel gear (13251) and a second bevel gear (13252), the first bevel gear (13251) is in transmission connection to a previous stage of gear pair of the last stage of gear pair, and the second bevel gear (13252) is fastened to the display assembly (120).

12. The adjustment mechanism (130) according to claim 10 or 11, wherein the transmission assembly (132) further comprises a second stage of gear pair (1323) and a third stage of gear pair (1324), wherein
the second stage of gear pair (1323) is a cylindrical gear pair, the second stage of gear pair (1323) comprises a third gear (13231) and a fourth gear (13232), the third gear (13231) and the fourth gear (13232) are separately rotatably assembled in the box (1321), and the third gear (13231) is fastened to the second gear (13222); and
the third stage of gear pair (1324) is a cylindrical gear pair, the third stage of gear pair (1324) comprises a fifth gear (13241a) and a sixth gear (13242a), the fifth gear (13241a) and the sixth gear (13242a) are separately rotatably assembled in the box (1321), the fifth gear (13241a) is in transmission connection to the fourth gear (13232) via a universal joint (1326), and the sixth gear (13242a) is in transmission connection to a driving gear of the last stage of gear pair.

13. The adjustment mechanism (130) according to claim 12, wherein the transmission assembly (132) further comprises a gear rod (1327), the gear rod (1327) extends from the inside of the box (1321) to the outside of the box (1321), the gear rod (1327) is slidably connected to the box (1321) and is capable of rotating relative to the box (1321), and a portion that is of the gear rod (1327) and that is located in the box (1321) has a special-shaped cross section;
the sixth gear (13242a) is slidably assembled on the portion that is of the gear rod (1327) and that is located in the box (1321), and a cross-sectional shape of a gear hole of the sixth gear (13242a) is the same as a cross-sectional shape of the special-shaped cross section; and
the driving gear of the last stage of gear pair is fastened to a portion that is of the gear rod (1327) and that is located outside the box (1321).

14. The adjustment mechanism (130) according to any one of claims 9 to 11, wherein the transmission assembly (132) further comprises a second stage of gear pair (1323), the second stage of gear pair (1323) is a cylindrical gear pair, the second stage of gear pair (1323) comprises a third gear (13231) and a fourth gear (13232), the third gear (13231) and the fourth gear (13232) are separately rotatably assembled in the box (1321), the third gear (13231) is fastened to the second gear (13222), and the fourth gear (13232) is in transmission connection to a driving gear of the last stage of gear pair via a universal joint.

15. The adjustment mechanism (130) according to claim 14, wherein the transmission assembly (132) further comprises a gear rod (1327);
the universal joint (1326) comprises a first universal joint fork (13261), a second universal joint fork (13262), and a cross shaft (13263), the cross shaft (13263) is separately assembled on the first universal joint fork (13261) and the second universal joint fork (13262), the first universal joint fork (13261) is fastened to the fourth gear (13232), an end that is of the second universal joint fork (13262) and that is away from the cross shaft (13263) is provided with a sleeve (132621), and an inner hole of the sleeve (132621) is a special-shaped hole; and
one end of the gear rod (1327) is slidably assembled on the sleeve (132621), a cross-sectional shape of the gear rod (1327) is the same as a cross-sectional shape of the special-shaped hole, and the other end of the gear rod (1327) is fastened to the driving gear of the last stage of gear pair.

16. A head-mounted display device, comprising a housing (110), a display assembly (120) mounted in the housing (110), and the adjustment mechanism (130) according to any one of claims 1 to 15, wherein there are two display assemblies (120) and two adjustment mechanisms (130), and the two display assemblies (120) are disposed in a one-to-one correspondence with the two adjustment mechanisms (130), wherein
the two display assemblies (120) are arranged in a first direction; and
each adjustment mechanism (130) is disposed on a side that is of one corresponding display assembly (120) and that faces away from the other display assembly (120), an adjustment rod (131) of the adjustment mechanism (130) is slidably assembled in the housing (110), the adjustment rod (131) has a first end exposed outside the housing (110), the adjustment rod (131) is in the first state when the first end of the adjustment rod (131) moves close to the housing (110), and the adjustment rod (131) is in the second state when the first end of the adjustment rod (131) moves away from the housing (110).

17. The head-mounted display device according to claim 16, wherein the display assembly (120) comprises a lens barrel (121), a display, a first lens (1221), and a lens support (123), the display is fastened in the lens barrel (121), the first lens (1221) is carried on the lens support (123), the lens support (123) is slidably disposed in the lens barrel (121) in an axial direction of the lens barrel (121), the lens support (123) is in transmission connection to the transmission assembly (132), and the lens support (123) is configured to slide in a direction close to or away from the display under driving of the transmission assembly (132).

18. The head-mounted display device according to claim 17, wherein the lens barrel (121) comprises a first barrel body (1211) and a second barrel body (1212), the first barrel body (1211) is configured to accommodate the display, the first lens (1221), and the lens support (123), a sliding rail (12111) extending in the axial direction is disposed on the first barrel body (1211), a sliding pin (1231) is disposed on a peripheral side of the lens support (123), and the sliding pin (1231) is slidably disposed on the sliding rail (12111); and
the second barrel body (1212) is sleeved on an outside of the first barrel body (1211), a spiral sliding slot (12121) is disposed on an inner wall of the second barrel body (1212), an end portion of the sliding pin (1231) extends from the inside of the sliding rail (12111) and is assembled in the sliding slot (12121), the second barrel body (1212) is in transmission connection to the transmission assembly (132), and the second barrel body (1212) is configured to rotate under driving of the transmission assembly (132).

19. The head-mounted display device according to any one of claims 16 to 18, wherein the housing (110) comprises a frame (111) and a cover plate (112) that is fastened in the frame (111), a first guide rail (1121) and a second guide rail are disposed on the cover plate (112), the first guide rail (1121) and the second guide rail are arranged in the first direction, and the first guide rail (1121) and the second guide rail separately extend in the first direction; and
one of the two display assemblies (120) is slidably assembled on the first guide rail (1121), and the other display assembly (120) is slidably assembled on the second guide rail.

20. The head-mounted display device according to any one of claims 16 to 19, wherein an electrical component in the head-mounted display device comprises a button (140), a first support arm (114) is disposed in the housing (110), an end portion of the first support arm (114) is disposed close to a second end of the adjustment rod (131), and the button is fastened to a side that is of the first support arm (114) and that faces the second end of the adjustment rod (131); and
the adjustment rod (131) is configured to trigger the button (140) when a pressing operation is received by the adjustment rod (131) in the first state.

21. The head-mounted display device according to any one of claims 16 to 20, wherein the electrical component in the head-mounted display device further comprises a sensor (150), a second support arm (115) is disposed in the housing (110), an end portion of the second support arm (115) is disposed close to a peripheral side of the adjustment rod (131), the sensor (150) is disposed at the end portion of the second support arm (115), and the sensor (150) is configured to detect a rotation signal of the adjustment rod (131).

22. The head-mounted display device according to any one of claims 16 to 21, wherein the head-mounted display device further comprises a processor, and the processor is configured to:
when it is determined that the head-mounted display device is in a state in which a handle is not connected, receive a signal sent by the electrical component when the electrical component is triggered by the adjustment mechanism; and
generate a corresponding control instruction based on a type of the signal, wherein the control instruction is used to control display content of a display interface of the head-mounted display device.

23. The head-mounted display device according to claim 22, wherein the processor is further configured to:
before receiving the signal sent by the electrical component when the electrical component is triggered by the adjustment rod, control, based on a head action or an eye action of a user, a cursor in the display interface to point to an interactive control in the display interface.

24. The head-mounted display device according to claim 22 or 23, wherein the type of the signal comprises a pressing signal, and the processor is configured to:
generate a first control instruction based on the pressing signal, wherein the first control instruction is used to control the cursor in the display interface to click the interactive control in the display interface.

25. The head-mounted display device according to any one of claims 22 to 24, wherein the type of the signal comprises the rotation signal, and the processor is configured to:
generate a second control instruction based on the rotation signal, wherein the second control instruction is used to control sliding of the display interface.

26. A display method of a head-mounted display device, comprising:
when it is determined that the head-mounted display device is in a state in which a handle is not connected, receiving a signal sent by an electrical component in the head-mounted display device when the electrical component is triggered by an adjustment mechanism of the head-mounted display device; and
generating a corresponding control instruction based on a type of the signal, wherein the control instruction is used to control display content of a display interface of the head-mounted display device.

27. The display method according to claim 26, wherein the display method further comprises:
before receiving the signal sent by the electrical component when the electrical component is triggered by the adjustment mechanism, controlling, based on a head action or an eye action of a user, a cursor in the display interface to point to an interactive control in the display interface.

28. The display method according to claim 26 or 27, wherein the type of the signal comprises a pressing signal, and the display method specifically comprises:
generating a first control instruction based on the pressing signal, wherein the first control instruction is used to control the cursor in the display interface to click the interactive control in the display interface.

29. The display method according to any one of claims 26 to 28, wherein the type of the signal comprises a rotation signal, and the display method specifically comprises:
generating a second control instruction based on the rotation signal, wherein the second control instruction is used to control sliding of the display interface.
